(19) Europäisches Patentamt
European Patent Office
Office européen des brevets

(11) EP 4 694 011 A1

(12) EUROPEAN PATENT APPLICATION
published in accordance with Art. 153(4) EPC

(43) Date of publication:
**11.02.2026 Bulletin 2026/07**

(21) Application number: **24785375.7**

(22) Date of filing: **08.04.2024**

(51) International Patent Classification (IPC):
*H04L 5/00* (2006.01) *H04L 1/08* (2006.01)
*H04L 5/14* (2006.01) *H04W 64/00* (2009.01)

(52) Cooperative Patent Classification (CPC):
**H04L 1/08; H04L 5/00; H04L 5/14; H04W 64/00**

(86) International application number:
**PCT/KR2024/004654**

(87) International publication number:
**WO 2024/210684 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 KR 20230045693**
**06.04.2023 KR 20230045723**
**11.05.2023 KR 20230061116**
**10.08.2023 US 202363532046 P**

(71) Applicant: **LG Electronics Inc.**
**Yeongdeungpo-gu**
**Seoul 07336 (KR)**

(72) Inventors:
- **CHOI, Minwoo**
  **Seoul 06772 (KR)**
- **HWANG, Seunggye**
  **Seoul 06772 (KR)**
- **SHIM, Jaenam**
  **Seoul 06772 (KR)**
- **YOU, Hyangsun**
  **Seoul 06772 (KR)**
- **KIM, Seonwook**
  **Seoul 06772 (KR)**
- **GO, Seongwon**
  **Seoul 06772 (KR)**

(74) Representative: **Plasseraud IP**
**104 Rue de Richelieu**
**CS92104**
**75080 Paris Cedex 02 (FR)**

# (54) METHOD AND DEVICE FOR TRANSMITTING/RECEIVING SIGNAL IN WIRELESS COMMUNICATION SYSTEM

(57) A method by which a terminal transmits a sounding reference signal (SRS) in a wireless communication system, according to at least one from among embodiments disclosed in the present specification, comprises: receiving, through higher layer signaling, configuration information regarding an SRS for positioning; and transmitting, on the basis of the configuration information including a frequency hopping configuration for the SRS for positioning, the SRS for positioning in a frequency band of each of a plurality of hops, wherein the frequency hopping configuration can include, on a time domain, i) information regarding a start position of each hop and ii) information regarding the length of each hop, and the terminal could not expect that a single hop from among the plurality of hops configured on the basis of the frequency hopping configuration would be configured beyond a single slot.

FIG. 26

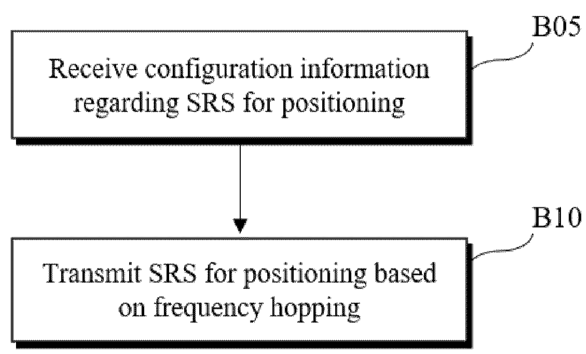


EP 4 694 011 A1

## Description

### TECHNICAL FIELD

The present disclosure relates to a wireless communication system, and more particularly, to a method and apparatus for transmitting or receiving an uplink/downlink signal in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method and device for transmitting or receiving signals more accurately and efficiently in a wireless communication system.

The objects of the disclosure are not limited thereto, and other objects may be inferred from the disclosed embodiments.

### TECHNICAL SOLUTION

In an aspect of the present disclosure, provided herein is a method of transmitting a sounding reference signal (SRS) by a user equipment (UE) in a wireless communication system. The method includes: receiving configuration information regarding an SRS for positioning through higher layer signaling; and based on that the configuration information includes a frequency hopping configuration for the SRS for positioning, transmitting the SRS for positioning in a frequency band of each of a plurality of hops. The frequency hopping configuration may include i) information regarding a start position of each hop in a time domain and ii) information regarding a length of each hop in the time domain. The UE may not expect a single hop among the plurality of hops configured based on the frequency hopping configuration to be configured beyond a single slot.

The UE may not expect any of the plurality of hops to be configured beyond a single-slot duration related to each hop.

Symbols from a start symbol to a last symbol of the single hop may be included within the single-slot duration.

In addition, i) the information regarding the start position of each hop may include information regarding a start symbol of each hop and information regarding a slot offset.

A position of a last symbol of each hop may be obtained by adding ii) the length of each hop to a position of the start symbol of each hop.

The frequency hopping configuration may further include at least one of: iii) information regarding a number of the plurality of hops, iv) information regarding a start physical resource block (PRB) of a leading hop in the time domain among the plurality of hops in the time domain, v) information regarding a hop bandwidth, or vi) information regarding a number of overlapped resource blocks between hops.

None of the plurality of hops is configured across a plurality of slots.

The UE may be a second-type UE with reduced capability to support a smaller maximum UE bandwidth than a first-type UE.

The frequency hopping may be performed based on radio frequency (RF) retuning.

In another aspect of the present disclosure, provided herein is a processor-readable recording medium having recorded thereon a program for performing the above-described SRS transmission method.

In another aspect of the present disclosure, provided herein is a memory configured to store instructions; and a processor configured to perform operations by executing the instructions. The operations of the processor may include: receiving configuration information regarding an SRS for positioning through higher layer signaling; and based on that the configuration information includes a frequency hopping configuration for the SRS for positioning, transmitting the SRS for positioning in a frequency band of each of a plurality of hops. The frequency hopping configuration may include i) information regarding a start position of each hop in a time domain and ii) information regarding a length of each hop in the time domain. The device may not expect a single hop among the plurality of hops configured based on the frequency hopping configuration to be configured beyond a single slot.

The device may further include a transceiver.

The device may be a UE operating in a wireless communication system.

The device may be a processing device configured to control a UE operating in a wireless communication system.

In another aspect of the present disclosure, provided herein is a method of receiving an SRS by at least one base station (BS) in a wireless communication system. The method includes: determining a frequency hopping configuration for an SRS for positioning; transmitting configuration information including the frequency hopping configuration to a UE through higher layer signaling; and receiving, from the UE, the SRS for positioning in a frequency band of each of a plurality of hops based on the configuration information including the frequency hopping configuration. The frequency hopping configuration may include i) information regarding a start position of each hop in a time domain and ii) information regarding a length of each hop in the time domain. Based on that the UE is a second-type UE with reduced capability to support a smaller maximum UE bandwidth than a first-type UE, the BS may determine the frequency hopping configuration such that a single hop among the plurality of hops is not configured beyond a single slot.

In another aspect of the present disclosure, provided herein is a processor-readable recording medium having recorded thereon a program for performing the above-described SRS transmission method.

In another aspect of the present disclosure, provided herein is a BS for wireless communication. The BS includes: at least one memory configured to store instructions; and at least one processor configured to perform operations by executing the instructions. The operations of the processor include: determining a frequency hopping configuration for an SRS for positioning; transmitting configuration information including the frequency hopping configuration to a UE through higher layer signaling; and receiving, from the UE, the SRS for positioning in a frequency band of each of a plurality of hops based on the configuration information including the frequency hopping configuration. The frequency hopping configuration may include i) information regarding a start position of each hop in a time domain and ii) information regarding a length of each hop in the time domain. Based on that the UE is a second-type UE with reduced capability to support a smaller maximum UE bandwidth than a first-type UE, the at least one processor is configured to determine the frequency hopping configuration such that a single hop among the plurality of hops is not configured beyond a single slot.

## ADVANTAGEOUS EFFECTS

According to an embodiment of the present disclosure, a signal can be more accurately and efficiently transmitted or received in a wireless communication system.

The effects of the disclosure are not limited thereto, and other advantageous effects may be inferred from the disclosed embodiments.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIGS. 13 and 14 illustrate examples of a 3GPP wireless communication system supporting ISAC.

FIG. 15 illustrates an example of a plurality of sounding reference signal for positioning (SRSp) hops included within one slot.

FIG. 16 illustrates an example of an SRSp hop truncated based on a slot boundary.
FIG. 17 illustrates an example of a frequency hopping operation of an SRSp resource that crosses a slot boundary.
FIGS. 18 to 21 illustrate examples of SRSp hops for a plurality of slots that do not overlap with a slot boundary.
FIG. 20 illustrates an example of SRSp resource mapping reconfigured based on a slot boundary.
FIGS. 21 and 22 illustrate examples of a frequency hopping operation of an SRSp resource truncated based on the slot boundary.
FIGS. 23 and 24 illustrate examples of a frequency hopping operation of an SRSp resource that crosses a slot boundary.
FIG. 25 is a diagram for explaining operations of a network and a user equipment (UE) according to an embodiment.
FIG. 26 illustrates a flow of an SRS transmission method of a UE according to an embodiment.
FIG. 27 illustrates a flow of an SRS reception method of a base station (BS) according to an embodiment.
FIGS. 28 to 31 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

As used herein, the term "base station" may be replaced with terms such as fixed station, Node B, gNode B (gNB), access point (AP), cell, transmission and reception point (TRP), etc. The term "relay" may be replaced with terms such as relay node (RN), relay station, etc. The term "terminal" may be replaced with terms such as user equipment (UE), mobile station (MS), mobile subscriber station (MSS), subscriber station (SS), etc.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S 104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Reduced Capability (RedCap) UE

Recently, in addition to the 5G main use cases (mMTC, eMBB and URLLC), use case areas spanning mMTC and eMBB, or mMTC and URLLC have received increasing importance/interest, and thus a need for a UE for efficiently supporting these use cases in terms of device cost, power consumption, form factor, or the like has increased. In the present disclosure, a UE for this purpose may be defined as a (NR) reduced capability (RedCap) UE/device. Apart from the RedCap device, a general NR UE that support all or one or more of 5G main use cases may be defined as NR (normal) UE/device or non-RedCap UE/device. The Redcap UE may be a UE for intentionally reducing some of 5G key capabilities (highest data rate, user experience data rate, latency, mobility, connection density, energy efficiency, spectrum efficiency, and regional traffic efficiency) defined in IMT-2020 to achieve all or part of low device cost/complexity, low power consumption, small form factor, and the like.

The area of 5G use cases spanning mMTC and eMBB, or mMTC and URLLC, which are target use cases of the Redcap device, is referred to as redcap use cases for convenience in the present disclosure. Redcap use cases may be, for example:

(1) Connected industries

1) A sensor and an actuator may be connected to a 5G network and a core.

- including large-scale industrial wireless sensor networks (IWSN) use cases and requirements
- Very demanding URLLC services as well as relatively low cost services requiring small device form factors with battery life of several years
- The requirements for the corresponding services are higher than low power wide area (LPWA), i.e., LTE-M/NB-IOT, but lower than URLCC and eMBB.
- Devices in these environments include: a pressure sensor, a humidity sensor, a thermometer, a motion sensor, an accelerometer, an actuator, and the like.

2) Smart city

- A vertical field of the smart city includes data collection and processing for more efficiently monitoring and controlling a city resource and providing a service to a city resident. In particular, surveillance camera deployment is an essential part not only in a smart city but also in a factory and an industrial site.

3) Wearable

- A wearable use case may include a smart watch, a ring, an eHealth-related device, and a medical monitoring device. One characteristic of the use case is a small size of a device.

The Redcap use cases may not be supported by low power wireless area (LPWA) UEs (e.g., LTE-M or NB-IoT) in terms of a bit rate, latency, or the like and may be functionally supported by an NR UE, but may be inefficient in terms of the manufacturing cost of a UE, form factor, battery life, and the like. Supporting the above use case areas in the 5G network with the redcap UE with characteristics such as low cost, low power, and small form factor may result in reduction of UE manufacturing and maintenance costs. Redcap use cases may have quite diverse requirements in terms of UE complexity, target bit rate, latency, power consumption, and the like. These redcap requirements may be divided into (generic) requirements that are commonly applied to all redcap use cases and (use case specific) requirements that are applied only to specific use case(s). Some representative generic and use case specific requirements may be defined as shown in Table 3 below.

[Table 3]

| |
|---|
| **[Generic requirements]**<br>Device complexity/cost: Main motivation for the new device type is to lower the device cost and complexity as compared to high-end eMBB and URLLC devices of Rel-15/Rel-16. This is especially the case for industrial sensors.<br>Device size: Requirement for most use cases is that the standard enables a device design with compact form factor<br>Deployment scenarios: System should support all FR1/FR2 bands for FDD and TDD |
| **[Use case specific requirements]**<br>**Industrial wireless sensors**<br>- Reference bit rate: < 2 Mbps (potentially UL heavy traffic)<br>- End-to-end latency: < 100 ms; ~ 5-10 ms for safety related sensors<br>- Battery: at least few years<br>- Communication service availability: 99.99%<br>- Stationary<br>**Video Surveillance**<br>- Reference bit rate: < 2-4 Mbps for economic video; ~7.5-25 Mbps for high-end video (UL heavy traffic) |

(continued)

| |
|---|
| - Latency: < 500 ms<br>- Reliability: 99%-99.9%.<br>**Wearables** |
| - Reference bit rate: 10-50 Mbps in DL and >= 5 Mbps in UL for smart wearable application<br>- Peak bit rate: 150 Mbps in DL and 50 Mbps in UL<br>- Battery: multiple days (up to 1-2 weeks) |

The above redcap requirements may be satisfied by (a combination of) various features provided by the UE and the BS, and the following shows examples of the features and sub-features supported by the UE/BS to satisfy the redcap requirements.

**i. Complexity reduction features:**

- Reduced number of UE RX/TX antennas
- UE bandwidth reduction
- Half-Duplex-FDD
- Relaxed UE processing time
- Relaxed UE processing capability

**ii. Power saving:**

- Reduced PDCCH monitoring by smaller numbers of BDs and CCE limits
- Extended DRX for RRC Inactive and/or Idle
- RRM relaxation for stationary devices

**iii. Coverage recovery/enhancement**

**SRS (sounding reference signal)**

The SRS is a UL reference signal transmitted by a UE and received by a BS. Based on the SRS, the BS may perform operations such as link adaptation, DL channel estimation based on channel reciprocity, UL beam management, UL precoding, and/or UL measurement acquisition.

The UE may receive SRS configuration information (e.g., TS38.331 SRS-Config IE) provided by the BS and determine parameters for SRS transmission based thereon. The configuration of the SRS is composed of a list of SRS-Resources, SRS-PosResources, SRS-ResourceSets, and SRS-PosResourcesets, where the SRS-ResourceSets and SRS-PosResourcesets each include sets of SRS-Resources and SRS-PosResources, respectively.

SRSs may be classified into three resource types according to the configuration of the time resources and transmission method.

When the resource type is set as periodic, the UE determines the position where the SRS resource configured through RRC is transmitted based on the configured period and offset, and periodically transmits, when configured, the SRS without separate signaling.

When the resource type is set as semi-persistent, the UE determines the position where the SRS resource configured through RRC is transmitted based on the configured period and offset. Then, when transmission of the SRS is activated by MAC CE, the UE starts periodic transmission of the indicated SRS. When the transmission is deactivated by MAC CE, the UE stops transmitting the SRS.

When the resource type is set as aperiodic, the UE transmits the indicated SRS in consideration of the position of the offset configured through RRC with respect to the reception timing of the DCI indicating triggering of the corresponding SRS resource set.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

### OTDOA (Observed Time Difference of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi,_1 = \frac{\sqrt{(x_t-x_i)^2+(y_t-y_i)^2}}{c} - \frac{\sqrt{(x_t-x_1)^2+(y_t-y_1)^2}}{c} + (T_i - T_1) + (n_i - n_1)$$

In Equation 1, c is the speed of light, {xt, yt} are (unknown) coordinates of a target UE, {$x_i$, $y_i$} are (known) coordinates of a TP, and {$x_1$, $y_1$} are coordinates of a reference TP (or another TP). Here, ($T_i$-$T_1$) is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV}\ \text{Type 1} = (\text{ng-eNB Rx-Tx time difference}) + (\text{UE E-UTRA Rx-Tx time difference})$$

$$T_{ADV}\ \text{Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth, and frequency/group/sequence hopping.

Multi RTT (round trip time)

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at $t_0$ and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$RTT = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. d1, d2, and d3 may be determined based on the measured RTT, and the location of a target device may be determined to be the intersection of the circumferences of circles with radiuses of d1, d2, and d3, in which BS1, BS2, and BS3 (or TRPs) are centered, respectively.

NG-RAN Positioning Architecture and Procedures

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).
(In step 1103) The AMF provides the location service response to the UE (1110) (e.g., location estimates for the UE).

## SRS (Sounding Reference Signal) for Positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.
In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.
Depending on the purpose of use of the SRS, RRC parameters are configured differently. For example, for an SRS for positioning, the configuration is indicated by SRS-PosResources and SRS-PosResourceSet. For SRSs used for other purposes (e.g., Rel.15 SRS), the configuration is indicated by SRS-Resources and SRS-ResourceSet.
Hereinafter, to avoid confusion between the SRS for positioning and the SRS for other purposes, the SRS for positioning is referred to as SRS-p, and the SRS used for other purposes (e.g., beam management) is referred to as SRS-m. In the new proposals of the present disclosure discussed below, the SRS may be interpreted as SRS-p, unless stated otherwise.
The method of mapping SRS resources in the time/frequency domain on a resource grid (e.g., FIG. 3) is defined in the standards documents. For SRS-m, repetition within a slot may be configured, and intra-slot frequency hopping based thereon is supported. However, for SRS-p, repetition within a slot cannot be configured according to the current NR standard (Rel-17), and intra-slot frequency hopping is not supported. For a periodic/semi-persistent SRS-m, inter-slot frequency hopping is supported in a periodic manner.
The SRS-p configuration may be provided based on the serving cell (or camp-on cell) of the UE, and the SRS-p transmitted by the UE based on the SRS-p configuration may be received by one or more cells (or TRPs), including the serving cell.
As an example, the SRS-p may be configured through the RRC parameters SRS-PosResourceSet and SRS-PosResource defined in the TS 38.331 standard. Specifically, when a higher layer parameter SRS-PosResource is configured for the SRS (i.e., SRS-p), and a higher layer parameter SpatialRelationInfoPos is configured, the ID of the configuration field for the reference RS is provided. The reference RS may be an SRS configured by the higher layer parameter SRS-Resource or SRS-PosResource, CSI-RS, SS/PBCH block, DL PRS of the serving cell, or DL PRS configured in the SS/PBCH block.
The UE is not expected to transmit multiple SRS resources with different spatial relationships on the same OFDM symbol.
If the higher layer parameter SpatialRelationInfoPos is not configured, the UE may use either a fixed spatial domain transmission filter or a different spatial domain transmission filter to transmit the SRS-p configured by the higher layer parameter SRS-PosResource across multiple SRS resources.
In the RRC_CONNECTED mode, the UE transmits the SRS-p configured by the higher layer parameter SRS-PosResource within an active UL BWP.
Only one RS source is provided for the higher layer parameter SpatialRelationInfoPos provided for each SRS-p resource.
In the case of operation on the same carrier, if the SRS-p conflicts with a scheduled PUSCH, the SRS-p is dropped on symbols where the collision occurs.
The UE does not expect that SRS-PosResource will be configured on the carrier of the serving cell with a slot format consisting of DL/UL symbols that are not configured for PUSCH/PUCCH transmission.
Depending on UE capabilities, SRS-p resources associated with an initial UL BWP may be configured, and the SRS-p resources are transmitted within the initial UL BWP in the RRC_INACTIVE mode with the same CP and SCS as configured for the initial UL BWP. Depending on UE capabilities, SRS-p resources for positioning may be configured outside the initial BWP in the RRC_INACTIVE mode, and a frequency location, bandwidth, SCS, and CP length may be configured for SRS-p transmission. The SRS-p resources configured outside the initial BWP in the RRC_INACTIVE mode are configured in the same bandwidth and CC as the initial UL BWP.

## ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

Since the radio frequency sensing function does not require connection to objects through devices in the network, it may provide services for object positioning without the need for a device. The capability to obtain range, speed, and angle information from radio frequency signals may enable a wide range of new functions such as object sensing, recognition of objects (e.g., vehicles, humans, animals, UAVs), high-precision positioning, tracking, and activity recognition. Wireless sensing services may provide information for various industries (e.g., unmanned aerial vehicles, smart homes, V2X, factories, railways, public safety, etc.), enabling applications such as intruder sensing, assisted driving and navigation, trajectory tracking, collision avoidance, traffic control, and health and transportation management. In some cases, wireless sensing may employ non-3GPP type sensors (e.g., radar, camera) to additionally support 3GPP-based sensing. For example, the operation of wireless sensing services, namely, the sensing operations, may rely on transmission, reflection, and scattering processing of wireless sensing signals. Therefore, wireless sensing may provide an opportunity to enhance conventional communication systems from communication networks into wireless communication and sensing networks.

FIGS. 13 and 14 illustrate examples in which ISAC is applied to a 3GPP wireless communication system. The embodiment of FIGS. 13 and 14 may be combined with various embodiments of the present disclosure. Specifically, FIG. 13 illustrates an example of sensing using a sensing receiver and a sensing transmitter present at the same location (e.g., monostatic sensing), and FIG. 14 illustrates an example of sensing using a sensing receiver and a sensing transmitter separated from each other (e.g., bistatic sensing).

The proposals discussed below are also applicable to the ISAC environment described above.

## Frequency hopping (FH) of SRS for positioning

Hereinafter, the problems of the prior art related to the matters to be discussed below and the motivations for the proposed embodiments will be described in brief.

- For improvement of positioning performance in SRSp transmission of the RedCap UE, the application of frequency hopping is required. The RedCap UE requires a relatively long switching delay (e.g., radio frequency (RF) retuning) for hopping, and as a result, transmission is performed over multiple slots.
- While the frequency hopping operation of a sounding reference signal for positioning (SRSp) is being performed, the transmission of other UL signals/channels is blocked, which causes a waste of resources. Thus, to prevent a waste of resources, the frequency hopping operation needs to be completed within the shortest possible time.
- In the Rel-17 standard, the transmission of SRSp resources is performed on a slot basis. As an example to address such problems, a method of transmitting across the slot boundary may be proposed.

3GPP has carried out standardization and technology development to support not only conventional portable terminals but also various devices such as MTC/NB-IoT. As one of these technologies, Reduced Capability (RedCap) NR, which lowers the capability of existing NR to obtain cost benefits, is less sensitive to data rates, and requires lower importance in terms of latency, was also introduced in Rel-17. UEs capable of supporting RedCap include wearables, industrial wireless sensors, and video surveillance. The UEs achieve capability benefits by reducing supported bandwidth, reducing the maximum numbers supported for MIMO layers, modulation order, and Rx branches, and by supporting half-duplex (HD) across all bands.

In the current 3GPP NR Rel-18 standard, the target requirement of positioning accuracy required for the RedCap UE is as follows, and most experiments have shown results that have not satisfied the target requirements of Table 4 below. In the case of the RedCap UE, the maximum frequency bandwidth supported is smaller compared with the normal UE supporting existing NR, which may cause performance degradation in terms of the decoding/detection accuracy of reference signals that are transmitted and received. Accordingly, frequency hopping is being discussed to improve the positioning accuracy of the RedCap UE.

[Table 4]

| | commercial use cases | IoT use cases |
|---|---|---|
| Horizontal positioning accuracy | (< 3 m) for 90% of UEs | (< 1 m) for 90% of UEs |
| Vertical positioning accuracy | (< 3 m) for 90% of UEs | (< 3 m) for 90% of UEs |

As described above, to allow the RedCap UE to perform the frequency hopping transmission operation, a switching delay between hops is required in consideration of RF retuning for frequency band changes, and this may increase the total transmission time of SRSp resources. Since an increase in resource transmission time restricts the transmission of other signal(s) or channel(s), minimization of the transmission time for resources using frequency hopping is required for efficient resource allocation. In the current NR Rel-17 standard, resource allocation in the time domain for SRSp resource(s) is supported on a slot basis.

Considering these characteristics and problems, the present disclosure proposes time-domain resource allocation methods for frequency hopping operations to support improvement of the accuracy performance of UL SRS-based positioning of a RedCap UE and efficient resource allocation.

Although the methods proposed in the present disclosure are described focusing on a UL SRS-based positioning technique in the 3GPP NR system, the proposed methods are not limited thereto. They may be generally applied to other positioning techniques capable of measuring UE positioning and various RSs. The proposed methods may be applied to all types of transmission/reception schemes and positioning techniques expected by the BS and the UE.

The methods proposed in the present disclosure may be implemented independently without any combination, or one or more of the methods may be combined and implemented in an associated manner. Some terms, symbols, and sequences used herein may be replaced with other terms, symbols, and sequences.

**[Proposal 1] Improved resource mapping for existing SRSp resource mapping and frequency hopping in time domain**

Proposal 1 proposes an efficient time-domain resource allocation method that reduces an inter-hop time gap by mapping one or more hops within a slot during the frequency hopping operation of SRSp resources.

In the current NR Rel-17 standard, resource allocation in the time domain for SRSp resource(s) is supported on a slot basis, and thus, an improved resource mapping method that does not consider the slot unit may be considered for the frequency hopping operation. In the current standard, time-domain resource mapping within a slot for semi-persistent or periodic SRSp resources is performed through the indication of the start position and symbol length parameters.

As an improved example, it may be considered to additionally define resource mapping parameters related to frequency hopping and to use combinations of the parameters. As a specific example, when the frequency hopping operation of the UE is expected, time-domain resource mapping configuration information related to the frequency hopping operation is additionally indicated, and the configuration information may indicate an inter-hop switching delay (e.g., unit: symbol) and the number of hops. In this case, among the time-domain resource-mapping parameters for SRSp resources supported in the existing NR Rel-17 standard, the value of a parameter that indicates the symbol length may be interpreted as the symbol length of one hop.

FIG. 15 schematically illustrates an example in which one SRSp resource is composed of a total of five hops each consisting of two symbols, and a frequency hopping operation having an inter-hop time gap of three symbols (FC203) is performed across a slot (FC204), and each block denotes symbols constituting an SRSp resource. As described above, the time-domain start position (FC201) of the frequency hopping operation may be configured by the start position parameter value in the resource-mapping configuration of an existing SRSp resource, and the number of symbols of each hop may be configured by the symbol parameter value nrof in the resource-mapping configuration. When the frequency hopping operation of the UE is expected, an inter-hop time gap (203) may be configured through a switching-delay parameter in units of symbols in additionally provided time-domain resource-mapping configuration information related to the frequency hopping operation. The hopping count of the entire frequency hopping operation may be configured through a parameter that indicates the number of hops in the configuration information.

The UE may acquire configuration information related to time-domain resource mapping of SRSp resource(s) provided by the BS. For example, when the UE is the RedCap UE, the UE may additionally acquire time-domain resource-mapping configuration information related to frequency hopping provided by the BS, and in this case, the UE may be expected to perform SRSp resource transmission using frequency hopping. The UE may use the received time-domain resource-mapping configuration information related to frequency hopping to perform frequency hopping transmission for the SRSp resource. As a specific example, the start position in the time domain and number-of-symbols parameters supported in the NR Rel-17 standard and the proposed switching delay and number-of-hops parameters may be used together to define the frequency hopping operation in the time domain, which may be expected to operate across slot boundaries. The UE transmits the SRSp resource while performing the frequency hopping operation at the SRSp resource transmission time configured/indicated by the received SRSp resource-mapping configuration information.

The BS may provide to the UE configuration information on SRSp resource(s) indicated by the LMF. For example, when the target UE is the RedCap UE, the BS may additionally transmit time-domain resource-mapping configuration information related to frequency hopping. Thereafter, the BS receives the SRSp resource transmitted from the UE at the configured/indicated frequency resource position(s) at the configured/indicated SRSp resource transmission time, combines/aggregates the received hops, performs measurements for positioning, and reports the measurements to the LMF.

For Proposal 1, the LMF may selectively provide configuration information related to the frequency hopping operation via the BS. The LMF receives from the BS the positioning-related measurement(s) obtained using the SRSp resource transmitted by the UE. Based on the measurement(s), the LMF is capable of estimating the position of the UE through computation.

Proposal 1 may reduce the likelihood of collisions with other UL signals or channels by minimizing the time gap between repetitions (/hops) of SRSp resources during frequency hopping, thereby decreasing the total time required in the time domain for the frequency operation. In addition, Proposal 1 may improve UL data transmission quality while maintaining positioning accuracy performance.

**[Proposal 2] Resource mapping at slot boundary**

Proposal 2 propose a method for handling at the slot boundary during resource mapping of SRSp resources where frequency hopping is performed.

As described above, in the current NR Rel-17 standard, resource allocation in the time domain for SRSp resource(s) is supported on a slot basis. Thus, since most UE transceivers are also implemented on a slot basis, and it is necessary to ensure that transmission of SRSp resources does not occur across slot boundaries. To this end, when resource mapping of SRSp resources is performed, the following methods may be considered: a method that allocates resources in consideration of the slot boundary such that the resources do not cross the slot boundary and a method that, if SRSp resources allocated through resource mapping cross the slot boundary, splits a corresponding hop and repeats the hop. Each method is described as Proposal 2-1 and Proposal 2-2.

Proposal 2-1. Repetitive allocation based on slot (or sub-slot) boundary (= resource mapping of repetition unit (single hop))

Proposal 2-1 proposes a method of performing time-domain resource mapping of the hops of an SRSp resource such that a single hop does not cross the slot boundary during the SRSp frequency hopping operation

As a method of performing time-domain resource mapping of the hops of an SRSp resource such that a single hop does not cross the slot boundary during the SRSp frequency hopping operation, the following may be considered: limiting the start position based on the symbol length of each hop, applying a symbol-level shift in the time domain to a hop that crosses the boundary, and replicating a hopping pattern on a slot basis with respect to the boundary. Each is described as Option 1, Option 2, and Option 3.

(Option 1) Start position limitation according to symbol length of hop

(i) Option 1-1

According to Proposal 1, when the start position, the number of symbols of a hop, and the switching delay between hops (e.g., unit: symbol) are configured, if the resource mapping is configured by restricting the start position based on the sum of the number of symbols of the hop and the switching delay between hops (e.g., unit: symbol), it is possible to prevent a hop from crossing the slot boundary during the frequency hopping operation of the SRSp resource.

As a specific example, when the number of symbols in one slot is $N_{symbol}^{slot}$ and the sum of the number of hops capable of being configured for the SRSp resource and the inter-hop switching delay (symbol unit) is $N_{symbol}^{hop,total}$, if $N_{symbol}^{hop,total}$ is greater than 1/2* $N_{symbol}^{slot}$ (e.g., 7 when $N_{symbol}^{slot}$ = 14), in the following equation for calculating the time-domain start position l_0 of transmission of the SRSp resource within a slot, the start-position parameter value corresponding to $l_{offset}$ may be limited to $N_{symbol}^{hop,total}$. Similarly, if $N_{symbol}^{hop,total}$ is less than or equal to 1/2* $N_{symbol}^{slot}$ (e.g., 7 when $N_{symbol}^{slot}$ = 14) and greater than Ceiling [1/4* $N_{symbol}^{slot}$] (e.g., 4 when $N_{symbol}^{slot}$ =14), the start-position parameter value may be limited to 2 $N_{symbol}^{hop,total}$.

[Equation 3]

$$l_0 = N_{symbol}^{slot} - 1 - l_{offset}$$

(ii) Option 1-2

When Option 1-1 is applied, a method of performing time-domain resource mapping by considering the sub-slot boundary instead of the slot boundary may be considered. For example, when $N_{symbol}^{slot}$ = 14, a virtual sub-slot boundary may be defined between the 7th and 8th symbols within a slot, and Option 1-1 may be applied such that the resource does not cross the boundary.

In the case of Option 1-2, since the number of symbols within a slot during SRSp resource transmission may be larger than in Option 1-1, there may be a benefit in terms of efficient resource allocation.

(iii) Option 1-3

According to Proposal 1, when the start position of the first hop is configured, resource mapping may be performed by restrict the configuration of the start position based on the switching gap (e.g., unit: symbol) required in consideration of RF retuning between adjacent hops in the time domain and the number of symbols of each hop, thereby ensuring that, during the frequency hopping operation of the SRSp resource, a hop does not cross the slot boundary.

Table 5 shows the start position of the first hop in the time domain. The start position of the first hop may be represented by a symbol index within a slot. For example, Table 5 may be for the first hop among five hops.

[Table 5]

| $N^{hop}_{symb}$ | | | | | | |
|---|---|---|---|---|---|---|
| | $\mu$= 0 (SCS = 15 KHz) | | | | | |
| | $T_{gap}$ = 70us | $T_{gap}$ = 140us | | | | |
| | | $\mu$= 1 (SCS = 30 KHz) | | | | |
| | | $T_{gap}$ = 70us | $T_{gap}$ = 140us | | | |
| | | | $\mu$= 2 (SCS = 60 KHz) | | | |
| | | | $T_{gap}$ = 70us | $T_{gap}$ = 140us | | |
| | | | | $\mu$= 3 (SCS = 120 KHz) | | |
| | | | | $T_{gap}$ = 70us | $T_{gap}$ = 140us | |
| | | | | | $\mu$= 4 (SCS = 240 KHz) | |
| | | | | | $T_{gap}$ = 70us | $T_{gap}$ = 140us |
| | $N^{gap}_{symb}$ = 1 | $N^{gap}_{symb}$ = 2 | $N^{gap}_{symb}$ = 4 | $N^{gap}_{symb}$ = 8 | $N^{gap}_{symb}$ = 16 | $N^{gap}_{symb}$ = 32 |
| 1 | {0,1,2,.13} | | | | | |
| 2 | {0,2,3,5,6,8, 9,11,12} | {0,2,3,4,6,7, 8,10,12} | {0,2,4,5,6,8, 10,11,12} | {0,2,4,5,6,8,9, 10,12,13} | No intra-slot | |
| 3 | {2,3,6,7} | {0,1,4,5,9,1 0} | {0,1,2,3,4,7, 8,9,10,11} | {0} | | |
| 4 | {0,4,9} | {4,10} | {0, 6} | No intra-slot | | |
| 5 | | {0,1,2,7,8,9 } | No intra-slot | | | |
| 6 | {0,1,7,8} | No intra-slot | | | | |
| ≥7 | No intra-slot | | | | | |

In Table 5, $T_{gap}$ denotes a switching time, $N^{gap}_{symb}$ denotes a switching gap (unit: symbol), and $N^{hop}_{symb}$ denotes the number of symbols per hop.

Table 5 lists symbol index values within a slot regarding the time-domain start position of the first hop for configuring a hop not to cross the slot boundary, according to the number of symbols of each hop and the inter-hop switching gap (e.g., unit: symbol) in the time domain, which are configured for the frequency hopping operation of the SRSp. The symbol index values are examples obtained by calculating all start positions of the first hop for the case where the number of OFDM symbols ($N_{symb}^{slot}$) within a slot is 14 symbols and hops are not allowed to cross the slot boundary when the number of symbols of each hop and the inter-hop switching gap in the time domain are identical. Table 5 is an example when the number of hops is 5, and the above configuration may be applied to any configurable number of hops to obtain a gain in multiplexing among UEs. The value of the inter-hop switching gap (e.g., unit: symbol) may be determined by the capability of the UE reported from the UE to the BS and by the numerology (i.e., SCS) of the SRSp.

When the number of symbols between the start and end of two adjacent hops in the time domain is greater than the number of OFDM symbols in one slot, intra-slot hopping may not be performed. In this case, to save time resources, a method of restricting the start position of the first hop may be used. Alternatively, for flexibility of resource mapping, the conventional slot-based SRS resource-mapping method may be applied to configure the start position of each hop identically. When the conventional slot-based resource-mapping method is applied, the inter-hop time gap should be configured on a slot basis, and the configuration of the time gap may follow Equation 4.

[Equation 4]

$$N_{slot}^{gap} = \text{Floor}\left[(N_{symb}^{hop} + N_{symb}^{gap}) / (N_{symb}^{slot} - 1)\right]$$

In the above equation, $N_{slot}^{gap}$ denotes the inter-hop time gap in slot-level resource-mapping, $N_{symb}^{hop}$ denotes the symbol length per hop, $N_{symb}^{gap}$ denotes the switching gap required in consideration of RF retuning between two adjacent hops in the time domain, and $N_{symb}^{slot}$ denotes the number of symbols within a slot. For example, when the sum of the symbol length per hop and the switching gap between two adjacent hops in the time domain is smaller than the number of symbols in one slot, the inter-hop slot-level time gap is zero slots, and hopping may be performed in each slot from the same start position.

In the above description, the proposed methods are explained mainly with examples for all cases of the symbol length of each hop in Table 5, but the methods are not limited thereto, and the methods may be applied to the symbol lengths of SRS resources supported in the current Rel-17 standard, as shown in Table 6.

Table 6 shows the start position of the first hop in the time domain. The start position of the first hop may be represented by a symbol index within a slot. For example, Table 6 may be for the first hop among five hops.

[Table 6]

| $N^{hop}_{symb}$ | $\mu$= 0 (SCS = 15 KHz) | | | | | |
|---|---|---|---|---|---|---|
| | $T_{gap}$ = 70us | $T_{gap}$ = 140us | | | | |
| | | $\mu$= 1 (SCS = 30 KHz) | | | | |
| | | $T_{gap}$ = 70us | $T_{gap}$ = 140us | | | |
| | | | $\mu$= 2 (SCS = 60 KHz) | | | |
| | | | $T_{gap}$ = 70us | $T_{gap}$ = 140us | | |
| | | | | $\mu$= 3 (SCS = 120 KHz) | | |
| | | | | $T_{gap}$ = 70us | = $T_{gap}$ 140us | |
| | | | | | $\mu$= 4 (SCS = 240 KHz) | |
| | | | | | $T_{gap}$ = 70us | $T_{gap}$ = 140us |
| | $N^{gap}_{symb}$ = 1 | $N^{gap}_{symb}$ = 2 | $N^{gap}_{symb}$ = 4 | $N^{gap}_{symb}$ = 8 | $N^{gap}_{symb}$ = 16 | $N^{gap}_{symb}$ = 32 |
| 1 | {0,1,2,.,13} | | | | | |
| 2 | {0,2,3,5,6,8, 9,11,12} | {0,2,3,4,6,7, 8,10,12} | {0,2,4,5,6,8, 10,11,12} | {0,2,4,5,6,8,9, 10,12,13} | No intra-slot | |
| 4 | {0,4,9} | {4,10} | {0, 6} | No intra-slot | | |
| 8, 9 | No intra-slot | | | | | |

In Table 6, $T_{gap}$ denotes a switching time, $N^{gap}_{symb}$ denotes a switching gap (unit: symbol), and $N^{hop}_{symb}$ denotes the number of symbols per hop.

Option 1-3 may be applied to all cases where, during frequency hopping, a hop does not cross the slot boundary, which may provide an advantage in terms of the scheduling flexibility of the BS.

In the cases of Options 1-1, 1-2, and 1-3, the hopping pattern, time resources, and frequency resources scheduled by the BS may be kept unchanged and used regardless of the slot boundary, which may provide an advantage in terms of efficient resource allocation. There may also be the advantage of preserving the UE multiplexing gain achieved through scheduling by the BS.

(Option 2) Symbol-level shifting in time domain

According to Proposal 1, when the start position, the number of symbols of a hop, and the inter-hop switching delay (e.g., unit: symbol) are configured, if there is a hop that crosses the slot boundary, resource mapping may be configured such that the time-domain positions of subsequent hops, including the hop, are symbol-level shifted so that the start position of the hop is located at the boundary. Therefore, during the frequency hopping operation of the SRSp resource, it is possible to prevent the hop from crossing the slot boundary.

FIG. 16 illustrates an example of a frequency hopping operation of an SRSp resource that crosses with the slot boundary. FIG. 16 shows a case in which one SRSp resource consists of a total of five hops, each composed of four symbols, and the frequency hopping operation is performed across a slot (FC303) with an inter-hop time gap of one symbol (FC302). Each block represents the symbols constituting the SRSp resource. FC301 denotes a hop that crosses the slot boundary (FC304). The different shading patterns of the blocks represent actual repetitions by the UE.

As a specific example of Option 2, when the third hop (FC301) of the SRSp resource crosses the slot boundary, the resource mapping may be reconfigured by delaying the third, fourth, and fifth hops by three symbols such that the start position of the hop is located at the boundary.

<u>(Option 3) Replicating hopping pattern on slot basis</u>

(i) Option 3-1

When a hop that crosses the slot boundary occurs, time-domain resource mapping may be configured such that the hopping pattern of the previous slot is identically repeated in the next slot. Therefore, during the frequency hopping operation of the SRSp resource, it is possible to prevent the hop from overlapping with the slot boundary.

FIG. 17 illustrates an example of a frequency hopping operation of an SRSp resource that crosses the slot boundary. FIG. 17 shows a case in which one SRSp resource consists of a total of five hops, each composed of four symbols, and the frequency hopping operation is performed across a slot (FC313) with an inter-hop time gap of one symbol (FC312). Each block represents the symbols constituting the SRSp resource. FC311 denotes the hop that crosses a slot boundary (FC314). The different shading patterns of the blocks represent actual repetitions of the UE.

As a specific example of Option 3-1, when the third hop (FC311) of the SRSp resource crosses the slot boundary, the hopping pattern may be configured by reconfiguring the configuration values: the time-domain start position and the number of symbols per hop of the previous hops with respect to the FC311 hop, for the subsequent hops including the FC311 hop. In this case, the frequency-domain start physical resource block (PRB), bandwidth, and comb pattern configuration values of the subsequent hops including the FC311 hop may be maintained.

(ii) Option 3-2

Even when a hop that crosses the slot boundary does not occur, it may be configured to perform time-domain resource mapping by identically repeating the hopping pattern of the previous slot in the next slot. Therefore, during the frequency hopping operation of the SRSp resource, it is possible to prevent the hop from overlapping with the slot boundary.

FIG. 18 illustrates an example of a frequency hopping operation of an SRSp resource that does not cross the slot boundary (FC324) but extends beyond the slot boundary (FC324). FIG. 18 shows a case in which one SRSp resource consists of a total of five hops, each composed of three symbols, and the frequency hopping operation is performed across a slot (FC323) with an inter-hop time gap of two symbols (FC322). Each block represents the symbols constituting the SRSp resource. The different shading patterns of the blocks represent actual repetitions of the UE.

As a specific example of Option 3-2, for hops that extend beyond the slot boundary, the hopping pattern may be configured by reconfiguring the configuration values: the time-domain start position and the number of symbols per hop of the previous hops. In this case, the frequency-domain start PRB, bandwidth, and comb pattern configuration values of those hops may be maintained.

In the case of Option 3-2, the relationship among SRSp resources in the time/frequency domain within a slot may be maintained, which may provide a gain in UE multiplexing.

The UE may acquire from the BS SRSp resource configuration information related to time-domain resource mapping so that resources do not cross the slot boundary. Based on the configuration information, the UE may perform the frequency hopping transmission operation of the SRSp resource in accordance with Proposal 1. The SRSp resource configuration information may include i) the start position of each hop in the time domain (e.g., start slot offset, start symbol within the slot), ii) the length of each hop (e.g., the number of symbols included in the hop), and iii) information on the number of hops. In addition, the SRSp resource configuration information may further include iv) the start PRB of the first hop in the time domain and v) information on the bandwidth of the hop. Additionally (optionally), the SRSp resource configuration information may further include vi) information on the number of overlapping RB(s) between hops.

The configuration operation that time-domain resource mapping is performed on the hops of an SRSp resource such that a single hop crosses the slot boundary during SRSp frequency hopping may not be expected by the UE. In other words, the UE may not expect that any single hop will be configured to cross the slot boundary. In other words, the time resources of one hop should be completely contained within one slot. Within a slot, the time resources of each hop are determined by i) the start symbol (in the slot) of each hop (included in the start-position information of each hop) and ii) the length of each hop (the number of symbols), and thus a combination of i) the start position of each hop and ii) the length of each hop needs to be configured such that each hop is not configured to cross the slot boundary. That is, the last symbol of the hop does not exceed the duration of the slot (or the last symbol of the slot). Here, the last symbol of the hop is the sum of i) the start symbol of the hop and ii) the length of the hop, and thus the relation of "i) the start symbol of the hop + ii) the length of the hop ≤ the slot length" should be satisfied. In other words, the UE does not expect that any single hop will be configured such that "i) the start symbol of the hop + ii) the length of the hop > the slot length."

When the frequency hopping operation is performed with resource mapping as described above, there are no cases in which at least one hop of the SRSp resource crosses the slot boundary, which may provide advantages in terms of both UE implementation complexity and positioning accuracy performance.

For some signals, for example, in the case of PUSCH repetitive transmission, if one of multiple PUSCH repetitions overlaps with the slot boundary, one PUSCH repetition is split into two actual Tx repetitions with respect to the boundary between slots, and the two split actual Tx repetitions may be transmitted in different slots, respectively. However, an actual Tx repetition with a split size of one symbol is dropped.

Unlike the PUSCH, since the SRSp resource consists of a single sequence, if the SRSp is split across slots similarly to the PUSCH, the single-sequence characteristic of SRSp may not be maintained, which may result in degradation of positioning performance. To address this problem, it is proposed to preemptively prevent the occurrence of a situation in which one hop of the SRSp extends across multiple slots.

Proposal 2-1-1. Method for guaranteeing inter-hop switching time when repetitive allocation is performed based on (sub-)slot boundary

When time-domain resource mapping is performed on the hops of an SRSp resource such that a single hop does not overlap with the slot boundary during the frequency hopping operation of the SRSp resource, a method for guaranteeing the inter-hop switching time is proposed.

As a method of guaranteeing the inter-hop switching time when performing time-domain resource mapping on the hops of an SRSp resource such that a single hop does not overlap with the slot boundary during the frequency hopping operation of the SRSp resource, the following may be proposed: a method that considers the time gap within a slot between the first hop and the slot boundary adjacent to the hop (hereinafter, "beginning gap"), a method that considers the total of the time gap(s) within the slot, and a method that drops a hop or symbol adjacent to the slot boundary. Each is described as Option 1, Option 2, and Option 3.

(Option 1) Time-domain resource mapping in consideration of beginning gap within slot

When time-domain resource mapping is performed in consideration of the slot boundary as above, cases may arise in which the inter-hop switching time is not guaranteed because the predefined hopping pattern is reconfigured. To this end, the time-domain start position of the first hop may be restricted in consideration of the time gap within a slot between the first hop and the slot boundary adjacent to the hop (i.e., the beginning gap), thereby ensuring the inter-hop switching time. That is, the time-domain start position of the first hop may be restricted such that the time gap (i.e., the beginning gap) between the starting slot boundary and the first hop is not less than the value of the inter-hop switching time required according to the UE capability.

FIG. 19 illustrates an example of a frequency hopping operation of an SRSp resource that does not cross the slot boundary (FC724) but extends beyond the slot boundary. FIG. 19 shows a case in which one SRSp resource consists of a total of five hops, each composed of three symbols, and the frequency hopping operation is performed across a slot (FC723) with an inter-hop switching time of two symbols (FC722). Each block represents the symbols constituting the SRSp resource. The different shading patterns of the blocks represent actual repetitions of the UE.

FIG. 20 illustrates an example of a frequency hopping operation of an SRSp resource where the time-domain resource mapping is reconfigured according to Option 1. One SRSp resource is configured to consist of a total of five hops, each composed of three symbols. FIG. 20 shows an example of the frequency hopping operation where The start position (FC725) of the first hop is set to a value smaller than the switching time, and the start position of the first hop is reconfigured to the second symbol. Each block represents the symbols constituting the SRSp resource. The different shading patterns of the blocks represent actual repetitions of the UE.

[Embodiment A-1] - Adaptive transmission of UE

As a specific example, when the switching time (FC722) is set to two symbols in FIG. 19, the time interval between the starting slot boundary of the slot and the first hop is one symbol and thus smaller than the switching time. Thus, to guarantee the inter-hop switching time, the start position of the first hop may also be restricted to after the second symbol.

When time-domain resource mapping is performed according to Option 3-2 of Proposal 2-1, as shown in FIG. 20, the UE adaptively resets the start position (FC925) of the first hop to the second symbol and then performs transmission by replicating the hopping pattern on a slot basis, thereby guaranteeing the inter-hop switching time between the last hop of the previous slot and the first hop of the subsequent slot

[Embodiment A-2] - Configuration by BS

As another specific example, when the switching time (FC722) is set to two symbols in FIG. 19, the time interval between the starting slot boundary of the slot and the first hop is one symbol and thus smaller than the switching time. Thus, to guarantee the inter-hop switching time, the start position of the first hop may be restricted by the BS to be allocated after the second symbol. If the BS allocates the start position of the first hop to the second symbol and provides the configuration information to the UE, the UE may guarantee the inter-hop switching time between the last hop of the previous slot and the first hop of the subsequent slot by replicating the hopping pattern based on the configuration information on a slot basis according to Option 3-2 of Proposal 2-1, as shown in FIG. 20.

In the case of Option 1, when time-domain resources are reconfigured, the UE may guarantee the required inter-hop switching time with low computational complexity.

(Option 2) Resource mapping in consideration of sum of beginning gap and ending gap within slot in time domain

When time-domain resource mapping is performed in consideration of the slot boundary as proposed above, cases may arise in which the inter-hop switching time is not guaranteed because the predefined hopping pattern is reconfigured. To this end, resource mapping may be restricted in consideration of the sum of the beginning gap and the ending gap within a slot, thereby guaranteeing the inter-hop switching time.

[Embodiment A] The start position of the first hop may be restricted such that the sum of the beginning gap within a slot and the time gap within the slot between the last hop and the slot boundary adjacent to the hop (hereinafter, "ending gap") is not less than the value of the inter-hop switching time required according to the UE capability.

FIG. 21 illustrates an example of a frequency hopping operation of an SRSp resource that does not cross the slot boundary (FE124) but extends beyond the slot boundary. FIG. 21 shows a case in which one SRSp resource consists of a total of five hops, each composed of two symbols, and the frequency hopping operation is performed across a slot (FE123) with an inter-hop switching time of three symbols (FE122). Each block represents the symbols constituting the SRSp resource. The different shading patterns of the blocks represent actual repetitions of the UE.

In FIG. 21, when the switching time (FE122) is set to three symbols, since the beginning gap (FE125) and the ending gap (FE126) are each one symbol and the sum of the two gaps is smaller than the switching time, the start position (FE125) of the first hop may be restricted to guarantee the inter-hop switching time.

[Embodiment A-1] - Adaptive transmission of UE

As a specific example, when time-domain resource mapping is performed according to Option 3 of Proposal 2-1, the UE adaptively resets the start position of the first hop to the third symbol, and then perform transmission by replicating the hopping pattern on a slot basis for the hops after the hop (FE121) that crosses the slot boundary according to Option 3-1. Therefore, the switching time between the last hop of the previous slot and the first hop of the subsequent slot may be guaranteed.

[Embodiment A-2] - Configuration by BS

As another example, when the BS maps the SRSp resource, the BS may be restricted to map the start position of the first hop to after the third symbol in order to guarantee the switching gap. The BS may guarantee the switching gap by setting the time-domain start position to the fourth symbol and providing the time-domain start position to the UE.

[Embodiment B] The number of symbols of the SRSp resource may be limited such that the sum of the inter-hop time gap(s) and the number of SRS transmission symbols within a slot does not exceed $N_{symb}^{slot}$. That is, the number of symbols of the SRSp resource may be limited such that Equation 5 is satisfied.

[Equation 5]

$$N_{\mathrm{symb}}^{\mathrm{SRS}} \geq N_{hop}\left(\frac{N_{\mathrm{symb}}^{\mathrm{Slot}}+T_{\mathrm{gap}}^{\mathrm{hop}}-T_{\mathrm{switch}}}{N_{\mathrm{hop}}^{\mathrm{Slot},i}}-T_{\mathrm{gap}}^{\mathrm{hop}}\right)$$

In Equation 5, $T_{gap}^{begin}$ denotes the time gap within a slot between the first hop and the slot boundary adjacent to the hop (i.e., the beginning gap), $T_{gap}^{cnd}$ denotes the time gap within a slot between the last hop and the slot boundary adjacent to the hop (i.e., the ending gap), $T_{gap}^{hop}$ denotes the time interval between SRSp resource hops within a slot, $N_{symb}^{slot}$ denotes the number of symbols in one slot, $N_{symb}^{SRS}$ denotes the number of symbols allocated to transmission of the SRSp resource, $N_{hop}$ denotes the number of hops configured for the SRSp resource, $N_{hop}^{Slot,i}$ denotes the number of hops allocated in the i-th slot, and $T_{switch}$ denotes the required switching time between adjacent hops according to the UE capability.

Option 2 may guarantee the required inter-hop switching time while minimizing wasted time resources during time-domain resource mapping for frequency hopping of the SRSp resource.

For example, the UE may acquire configuration information of the SRSp resource(s) provided by the BS. Based on resource-mapping information in the information, transmission of the SRSp resource is expected. In this case, if the indicated resource mapping crosses the slot boundary, the UE may be expected to reconfigure the resource mapping according to the methods of Proposal 2-1 or other methods. If the switching gap is not guaranteed, the UE may be expected to reconfigure the resource mapping according to the proposed method(s). Thereafter, the UE may transmit the SRSp resource at the configured/indicated positions of the frequency resource(s) at the reconfigured SRSp resource transmission time.

For example, the BS may provide the configuration information of the SRSp resource(s) to the UE, based on configuration information related to the SRSp resource(s) in a positioning information request message from the LMF. If the resource mapping within the provided information crosses the slot boundary, the BS may expect the UE to reconfigure the resource mapping according to the methods of Proposal 2-1 or other methods. If the switching gap is not guaranteed, the BS may either expect the UE to reconfigure the resource mapping according to the proposed method(s) or perform the configuration under the restrictions of the proposed method(s). Thereafter, the BS may receive the SRSp resource transmitted from the UE at the configured/indicated positions of the frequency resource(s) at the SRSp resource transmission time expected to be reconfigured, combine/aggregate the received hops, perform measurements for positioning, and report the measurements to the LMF.

For example, the LMF may request from the BS the configuration information of the SRSp resource(s) and may receive from the BS the configuration information of the SRSp resource(s) actually configured by the BS. The LMF receives from the BS the positioning-related measurement(s) measured using the SRSp resource transmitted by the UE. Based on the measurement(s), the LMF may estimate the position of the UE by computation.

When the proposed method(s) are used, the required switching time between adjacent hops may be guaranteed for the time-domain resource-mapping method that prevents a hop from overlapping with the slot boundary during the frequency hopping operation.

Hereinabove, the solutions to problems that arise when time-domain resource mapping is reconfigured due to overlapping with the slot boundary have been described. However, the application of the proposed methods is not limited thereto and may be generally applied to other issues that occur during resource mapping of reference signals.

(Option 3) Dropping hop(s) or symbol(s) adjacent to slot boundary

When time-domain resource mapping is performed in consideration of the slot boundary, cases may arise in which the inter-hop switching time is not guaranteed due to the reconfiguration of the predefined hopping pattern. To this end, the inter-hop switching time may be ensured by dropping hop(s) or symbol(s) adjacent to the slot boundary.

FIG. 22 illustrates an example of a frequency hopping operation of an SRSp resource that does not cross the slot boundary (FE101) but extends beyond the slot boundary. FIG. 22 shows a case in which one SRSp resource consists of a total of five hops, each composed of three symbols, and the frequency hopping operation is performed across a slot with an inter-hop time gap of two symbols (FE105). Each block represents the symbols constituting the SRSp resource. The different shading patterns of the blocks represent actual repetitions of the UE.

As a specific example, when time-domain resource mapping is performed according to Option 3-2 of Proposal 2-1, the hop (FE103) before the slot boundary corresponding to FE101 of FIG. 22 or the subsequent hop (FE104) may be dropped on a hop basis, thereby guaranteeing the switching time. In this case, the increase of complexity and power consumption of the UE due to frequent RF retuning for the drop may be minimized. As another example, when time-domain resource mapping is performed according to Option 3-2 of Proposal 2-1, the last symbol (FE103) of the hop before the slot boundary corresponding to FE101 or the first symbol (FE104) of the subsequent hop may be dropped, thereby guaranteeing the switching time. In this case, there may be the advantage of minimizing the reduction of positioning accuracy performance due to the drop.

For example, since additional time-domain resources for the frequency hopping operation of the SRSp resource do not need to be allocated, there may be the advantage of reducing time-resource overhead and guaranteeing data transmission and reception.

Proposal 2-2. Splitting at slot boundary and repetition (= resource mapping (of all hops) at resource unit level)

In Proposal 2-2, an operational method is proposed for the case where, during SRSp frequency hopping, at least one hop of an SRSp resource, where time-domain resource mapping is performed without consideration of the slot boundary, crosses the slot boundary. In this situation, the following methods may be considered: a method that performs no special handling for the slot boundary, a method that splits at the slot boundary into actual repetitions, or a method that drops part of the split repetitions. Each is described as Option 1, Option 2, and Option 3.

(Option 1) Method that does not perform separate processing (handling) for symbols overlapping with slot boundary

FIG. 16 illustrates an example of a frequency hopping operation of an SRSp resource that crosses the slot boundary. FIG. 16 shows a case in which one SRSp resource consists of a total of five hops, each composed of four symbols, and the frequency hopping operation is performed across a slot (FC303) with an inter-hop time gap of one symbol (FC302). Each block represents the symbols constituting the SRSp resource. FC301 denotes the hop that crosses the slot boundary (FC304). The different shading patterns of the blocks represent actual repetitions of the UE.

It is also possible to consider a method that performs no separate processing for a hop that crosses the slot boundary. As a specific example, in FIG. S3, for the third hop (FC301) that crosses the slot boundary (FC304), the UE may transmit only r_3(0), r_3(1), and r_3(2) among the four sequences r_3(0), r_3(1), r_3(2), and r_3(3), which are generated for four symbols. For the fourth symbol, the UE may transmit the previously generated sequence r_3(3) in the next slot.

In the case of Option 1, when the sequence is identical for each SRSp burst (hop), no additional operation is required for the UE, and thus, there may be an advantage in terms of UE implementation.

(Option 2) Method of splitting into actual repetitions at slot boundary

FIG. 23 illustrates an example of a frequency hopping operation of an SRSp resource that crosses the slot boundary. FIG. 23 shows a case in which one SRSp resource consists of a total of five hops, each composed of four symbols, and the frequency hopping operation is performed across a slot (FC403) with an inter-hop time gap of one symbol (FC402). Each block represents the symbols constituting the SRSp resource. FC401 denotes the hop that crosses the slot boundary (FC404). The different shading patterns of the blocks represent actual repetitions of the UE.

In the case of a hop that crosses the slot boundary, a method of splitting the hop into two actual repetitions with respect to the slot boundary may be considered. Symbols belonging to the slot before the slot boundary may be transmitted with the sequences generated per symbol, and symbols belonging to the slot after the slot boundary may be transmitted after generation of new sequences starting from the symbol closest to the slot boundary. As a specific example, in FIG. S4, for the third hop (FC401) that crosses the slot boundary (FC404), the UE may transmit only r_3(0), r_3(1), and r_3(2) among the four sequences r_3(0), r_3(1), r_3(2), and r_3(3) generated for four symbols. For the fourth symbol, the UE may transmit a newly generated sequence r_3(0)' in the next slot.

In the case of Option 2, when the sequence is generated differently for each SRSp burst (hop), there may be an advantage in terms of UE implementation because there is no need to store the sequence generated in the previous slot until the next slot.

(Option 3) Splitting at slot boundary and partial dropping

FIG. 24 illustrates an example of a frequency hopping operation of an SRSp resource that crosses the slot boundary. FIG. 24 shows a case in which one SRSp resource consists of a total of five hops, each composed of four symbols, and the frequency hopping operation is performed across a slot (FC503) with an inter-hop time gap of one symbol (FC502). Each block represents the symbols constituting the SRSp resource. FC401 denotes the hop that crosses the slot boundary (FC504). The different shading patterns of the blocks represent actual repetitions of the UE.

In the case of a hop that crosses the slot boundary, a method of splitting the hop with respect to the slot boundary and dropping the split hop according to the following rule options may be considered.

(i) Rule Option 1: Considering positioning accuracy performance, a rule may be configured to drop fewer symbols among symbols corresponding to the slots before and after the slot boundary.

(ii) Rule Option 2: Considering UE implementation complexity, a rule may be configured to drop symbols in the slot after the slot boundary.

For example, the UE may obtain SRSp resource configuration information provided by the BS. When multiple SRSp resource symbols are transmitted according to the resource mapping for the frequency hopping operation of the SRSp resource, if the SRSp transmission symbols overlap with the slot boundary, the transmission of the symbols may not be performed and may be dropped according to the above rule options.

When the proposed method is used and the frequency hopping operation of the SRSp resource is performed across multiple slots, flexibility may be ensured in the time-domain resource mapping of the SRSp resource.

**[Proposal 3] Collision handling with DL slots in TDD environment**

In Proposal 3, when transmission is not completed within a UL slot configured/indicated for SRS frequency hopping and a DL slot follows in a TDD environment, a method for handling the remaining symbols is proposed. The proposed method is described as Case 1 and Case 2 according to the resource-mapping methods proposed in Proposal 2-1 and Proposal 2-2 above.

**(Case 1) Resource mapping that does not allow SRSp resource to cross slot boundary**

In a TDD environment, when transmission is not completed within a UL slot configured/indicated for SRS frequency hopping and a DL slot follows, the following may be considered to handle the remaining repetitions: a method of continuing to transmit the remaining symbols in a subsequent UL slot, and a method of dropping the remaining symbols. Each is described as Option 1 and Option 2.

(Option 1) Dropping repetitions

If the UE does not complete the frequency hopping operation within consecutive UL slots configured/indicated for frequency hopping of the SRSp resource, transmission of the remaining hops (repetitions) may not be expected.

(Option 2) Continuing transmission of remaining repetitions in next UL slot

If the UE does not complete the frequency hopping operation within UL slots configured/indicated for frequency hopping of the SRSp resource, retransmission of the remaining hops (repetitions) may be expected in UL slots allocated after DL slots.

**(Case 2) Resource mapping that allows SRSp resource to cross slot boundary**

In a TDD environment, when transmission is not completed within a UL slot configured/indicated for SRS frequency hopping and a DL slot follows, the following may be considered to handle the remaining symbols and repetitions: a method of continuing to transmit the remaining symbols and repetitions in subsequent UL slots, and a method of dropping the remaining symbols and repetitions. Each is described as Option 1 and Option 2.

(Option 1) Dropping remaining symbols and repetitions

If the UE does not complete the frequency hopping operation within consecutive UL slots configured/indicated for frequency hopping of the SRSp resource, transmission may not be expected for the symbols after the boundary among the repetitions that cross the slot boundary between UL and DL slots, as well as for any other remaining hops (repetitions).

(Option 2) Continuing transmission of remaining symbols and repetitions in next UL slot

If the UE does not complete the frequency hopping operation within consecutive UL slots configured/indicated for frequency hopping of the SRSp resource, retransmission of the symbols after the boundary among the repetitions that cross the slot boundary between UL and DL slots, as well as any other remaining hops (repetitions) may be expected in UL slots allocated after the DL slots. When retransmission is performed in a subsequently allocated UL slot, a method of transmitting the symbols corresponding to the portion after the boundary among the repetitions that cross the slot boundary may be divided into a method of following the sequence generation of the previous slot and a method of generating and transmitting a new sequence for the corresponding slot, according to the methods of Option 1 and Option 2 of Proposal 2-2.

Next, a method of assigning an ID to RRC configuration information related to frequency hopping and configuring/indicating the ID for the frequency hopping operation of the SRSp resource will be described.

**[Proposal 4] Direct indication of switching of frequency hopping configuration via RRC**

Proposal 4 proposes a method in which RRC configuration information related to frequency hopping is assigned as an ID to configure the frequency hopping operation of the SRSp resource, and when switching of the frequency hopping configuration is required, the ID of the frequency hopping configuration to switch to is directly indicated.

**• Provision of configuration related to frequency hopping**

A frequency hopping configuration ID parameter may be additionally defined in the RRC configuration of the SRSp resource, to indicate the ID of a frequency hopping configuration set preconfigured via RRC. During transmission of the SRSp resource, the frequency hopping operation may be performed by using the configuration information corresponding to the frequency hopping configuration set ID. For example, the FHconfig-ID parameter may be additionally defined as optional within the freqHopping-r16 field in the SRS-PosResource-16 IE that contains the RRC configuration information of the SRSp resource. When the frequency hopping operation is required for the SRSp resource, the ID of the frequency hopping configuration information may be indicated via the FHconfig-ID parameter. The UE may perform the frequency hopping operation of the SRSp resource by using the configuration information corresponding to the indicated ID among the preconfigured frequency hopping configuration information defined by newly defined FHconfig IE,

**• Configuration content related to frequency hopping**

The configuration information related to frequency hopping may include frequency hopping pattern information including the number of hops, the bandwidth of the hop, the inter-hop time gap, the number of symbols per hop, and overlapped RB(s), together with the ID of the configuration information. To reduce parameter overhead, the number of symbols per hop and the bandwidth of the hop may be configured by using existing SRSp resource configuration information without separate RRC parameters. For example, fields for the number of hops, the bandwidth of the hop, the inter-hop time gap, the number of symbols per hop, and overlapped RB(s) may be added in the FHconfig IE to allow the configuration of each value, and the bandwidth of the hop, the number of symbols per hop, and overlapped RB(s) may be configured optionally. If the parameters set as optional are not configured, the number of symbols per hop may be configured to follow the number of symbols of the SRSp resource, the bandwidth of the hop may be set to a value obtained by evenly dividing the bandwidth of the SRSp resource by the number of hops, and the overlapped RB(s) may not be configured.

**• SRSp resource frequency hopping transmission**

If the UE is configured/indicated with the proposed frequency hopping-related configuration components from the BS according to the proposed configuration/indication method, the UE may perform the frequency hopping operation in combination with the configuration information of the SRSp resource obtained from the BS. During the frequency hopping operation of the SRSp resource, the start position in the frequency domain follows the information within the configuration of the SRSp resource associated with the active BWP. The BW of each hop may be configured/indicated separately within the frequency hopping configuration as described above, or the BW of each hop may follow BW information within the configuration of the SRSp resource. During the frequency hopping operation of the SRSp resource for the RedCap UE, the hopping pattern in the frequency domain may be limited to a sequential staircase pattern. During the frequency hopping operation of the SRSp resource, the start position in the frequency domain follows the information within the configuration of the SRSp resource associated with the active BWP. After each hop, the values of the inter-hop time gaps configured/indicated within a separate frequency hopping configuration may be applied to perform the time-domain resource mapping of each hop.

For example, the UE may obtain the configuration information of the SRSp resource(s) provided by the BS. When the UE is the RedCap UE, the UE may be configured with the frequency hopping pattern used for SRSp transmission, through a parameter related to the frequency hopping configuration ID within the received SRSp resource. As a specific method, the configuration information related to frequency hopping and the configuration ID may be associated with an IE related to the frequency hopping configuration and preconfigured via an RRC message. Thereafter, the UE transmits the SRSp resource at the configured/indicated positions of frequency resource(s) at the configured/indicated SRSp resource transmission time.

For example, the BS may provide to the UE the configuration information of the SRSp resource(s) indicated by the LMF. When the target UE is the RedCap UE, the BS may configure and provide the frequency hopping pattern used for SRSp transmission through a parameter related to the frequency hopping configuration ID of the SRSp resource to be transmitted. As a specific method, the configuration information related to frequency hopping and the configuration ID may be associated with an IE related to the frequency hopping configuration and preconfigured via an RRC message. Thereafter, at the configured/indicated SRSp resource transmission time, the BS receives the SRSp resource transmitted from the UE at the configured/indicated positions of frequency resource(s), combines/aggregates the received hops, performs measurements for positioning, and reports the measurements to the LMF.

For example, the LMF may deliver the configuration information of the SRSp resource(s) through the BS. The LMF receives from the BS the positioning-related measurement(s) measured using the SRSp resource transmitted by the UE, and through the measurement(s), the LMF may estimate the position of the UE by computation.

When the ID assigned for the configuration information related to frequency hopping is indicated as described above, there may be an advantage of saving resources.

In the above proposal, the proposed method is explained by considering the method for the SRSp resource. However, the proposed method is not limited to the terminology used in the description, and the proposed method may be considered for the following: per SRSp resource set, per BWP, per UE, and/or per carrier.

## [Proposal 5] Method of switching frequency hopping configuration in association with active BWP

Proposal 5 proposes a method of associating RRC configuration information related to frequency hopping with a BWP and performing switching of a frequency hopping configuration according to the switching of the BWP to configure the frequency hopping operation of the SRSp resource.

### • Provision of configuration related to frequency hopping

By composing the configuration information related to frequency hopping into sets, assigning IDs, and associating each ID with a configured BWP, it is possible to perform the frequency hopping operation for SRSp resources allocated within the active BWP based on the frequency hopping configuration information corresponding to the active BWP. For example, the FHconfig-ID field with an optional attribute may be added within a BWP IE that contains configuration information of a preconfigured BWP. When that BWP is activated, during SRSp resource transmission within the active BWP, it is possible to perform the frequency hopping operation based on preconfigured configuration information related to frequency hopping corresponding to the frequency hopping configuration ID indicated by the field.

### • Configuration content related to frequency hopping

The configuration information related to frequency hopping may include frequency hopping pattern information including the number of hops, the bandwidth of the hop, the inter-hop time gap, the number of symbols per hop, and overlapped RBs, together with the ID of the configuration information. To reduce parameter overhead, the number of symbols per hop and the bandwidth of the hop may be configured based on existing SRSp resource configuration information without separate RRC parameters. For example, fields for the number of hops, the bandwidth of the hop, the inter-hop time gap, the number of symbols per hop, and overlapped RB(s) may be added in the FHconfig IE to allow the configuration of each value, and the bandwidth of the hop, the number of symbols per hop, and overlapped RB(s) may be configured optionally. If the parameters set as optional are not configured, the number of symbols per hop may be configured to follow the number of symbols of the SRSp resource, the bandwidth of the hop may be set to a value obtained by evenly dividing the bandwidth of the SRSp resource by the number of hops, and the overlapped RB(s) may not be configured.

### • SRSp resource frequency hopping transmission

If the UE is configured/indicated with the proposed frequency hopping-related configuration components from the BS according to the proposed configuration/indication method, the UE may perform the frequency hopping operation in combination with the configuration information of the SRSp resource obtained from the BS. During the frequency hopping operation of the SRSp resource, the start position in the frequency domain follows the information within the configuration of the SRSp resource associated with the active BWP. The BW of each hop may be configured/indicated separately within the frequency hopping configuration as described above, or the BW of each hop may follow BW information within the configuration of the SRSp resource. During the frequency hopping operation of the SRSp resource for the RedCap UE, the hopping pattern in the frequency domain may be limited to a sequential staircase pattern. During the frequency hopping operation of the SRSp resource, the start position in the frequency domain follows the information within the configuration of the SRSp resource associated with the active BWP. After each hop, the values of the inter-hop time gaps configured/indicated within a separate frequency hopping configuration may be applied to perform the time-domain resource mapping of each hop.

The configuration information related to frequency hopping may include frequency hopping pattern information including the number of hops, the bandwidth of the hop, the inter-hop time gap, the number of symbols per hop, and overlapped RBs, together with the ID of the configuration information. To reduce parameter overhead, the number of symbols per hop and the bandwidth of the hop may be configured based on existing SRSp resource configuration information without separate RRC parameters. For example, fields for the number of hops, the bandwidth of the hop, the inter-hop time gap, the number of symbols per hop, and overlapped RB(s) may be added in the FHconfig IE to allow the configuration of each value, and the bandwidth of the hop, the number of symbols per hop, and overlapped RB(s) may be configured optionally. If the parameters set as optional are not configured, the number of symbols per hop may be configured to follow the number of symbols of the SRSp resource, the bandwidth of the hop may be set to a value obtained by evenly dividing the bandwidth of the SRSp resource by the number of hops, and the overlapped RB(s) may not be configured.

For example, the UE may acquire configuration information of the SRSp resource(s) provided by the BS. When the UE is the RedCap UE, the UE may be expected to transmit the SRSp resource while performing the frequency hopping operation, and, in this case, a frequency hopping pattern used for SRSp transmission may be configured through a parameter related to the frequency hopping configuration ID within the active BWP associated with the SRSp resource. The UE transmits the SRSp resource at the configured/indicated positions of the frequency resource(s) at the configured/indicated transmission time of each hop of the SRSp resource.

For example, the UE may acquire configuration information of the SRSp resource(s) provided by the BS. When the UE is the RedCap UE, the UE may be expected to transmit the SRSp resource while performing the frequency hopping operation, and, in this case, a frequency hopping pattern used for SRSp transmission may be configured through a parameter related to the frequency hopping configuration ID within the active BWP associated with the SRSp resource. The UE transmits the SRSp resource at the configured/indicated positions of the frequency resource(s) at the configured/indicated transmission time of each hop of the SRSp resource.

For example, the BS may provide to the UE the configuration information of the SRSp resource(s) indicated by the LMF. When the target UE is the RedCap UE, the BS may transmit the configuration information of the frequency hopping operation of the SRSp resource to be received from the UE in the form of the ID of a preconfigured frequency hopping configuration, in association with the BWP. When the BWP is activated, the BS may expect the UE to transmit according to the frequency hopping configuration associated with the BWP. At the configured/indicated SRSp resource transmission time, the BS receives the SRSp resource transmitted from the UE at the configured/indicated positions of the frequency resource(s), combines/aggregates the received hops, performs measurements for positioning, and reports the measurements to the LMF.

When the frequency hopping-related configuration is performed in association with the active BWP, no separate indication for frequency hopping is required, thereby saving resources. Since frequency hopping starts within the active BWP, there may be an advantage of reducing the duration of the frequency hopping operation from the perspective of RF retuning.

For example, the LMF may deliver the configuration information of the SRSp resource(s) through the BS. The LMF receives from the BS the positioning-related measurement(s) measured using the SRSp resource transmitted by the UE, and through the measurement(s), the LMF may estimate the position of the UE by computation.

FIG. 25 is a diagram for explaining operations of a network and a UE according to an embodiment.

In FIG. 25, the network may include at least one of a node functioning as a positioning server such as an LMF and/or one or more BSs/TRPs. For example, in FIG. 25, transmission/reception/measurement of radio signals related to a radio interface between the network and the UE are interpreted as operations of the BSs/TRPs, and determination of the position of the UE may be interpreted as being performed by the BSs and/or at a positioning server such as the LMF, depending on the positioning technique.

Referring to FIG. 25, the UE may report a UE capability to the network through higher layer signaling (A05). Through the UE capability, the UE may reporting that the UE is a second-type UE (RedCap UE) with reduced capability to support a smaller UE maximum bandwidth than that of a first-type UE (e.g., normal UE).

The network may determine a frequency hopping configuration for an SRS for positioning (A10). Based on that the UE is the second-type UE (RedCap UE) with reduced capability to support a smaller UE maximum bandwidth than that of the first-type UE, the network may determine the frequency hopping configuration such that a single hop among a plurality of hops is not configured beyond a single slot. The frequency hopping configuration may include i) information regarding a start position of each hop and ii) information regarding a length of each hop in the time domain.

The network may transmit configuration information regarding the SRS for positioning that includes the frequency hopping configuration to the UE via higher layer signaling (A15). In other words, the UE may receive, through higher layer signaling, the configuration information regarding the SRS for positioning.

Based on the UE being a second type UE with reduced capability to support a smaller UE maximum bandwidth than that of a first type UE, the UE can be configured not to expect that a single hop among the plurality hops which are configured based on the frequency hopping information, is configured beyond a single slot.

The UE may generate an SRS sequence based on the configuration information regarding the SRS (A20).

The UE may transmit the SRS for positioning in each frequency band of each of a plurality of hops, based on the configuration information including a frequency hopping configuration for the SRS for positioning (A25, A26, A27, and A28). The frequency hopping may be performed based on RF retuning of the UE.

The network may measure the SRS transmitted by the UE and determine the position of the UE based on the measurement (A30).

FIG. 26 illustrates a flow of an SRS transmission method of a UE according to an embodiment.

Referring to FIG. 26, the UE may receive configuration information regarding an SRS for positioning via higher layer signaling (B05).

The UE may transmit the SRS for positioning in each frequency band of each of a plurality of hops, based on the configuration information including a frequency hopping configuration for the SRS for positioning (B10).

The frequency hopping configuration may include (i) information regarding a start position of each hop and (ii) information regarding a length of each hop in the time domain.

The UE can be configured not to expect that a single hop among the plurality hops which are configured based on the frequency hopping configuration, is configured beyond a single slot.

The UE may be configured not to expect that any of the plurality of hops is configured to extend beyond a single-slot duration associated with each hop.

The symbols of the single hop, from the start symbol to the last symbol, may be included within the single-slot duration.

i) The information regarding the start position of each hop may include information regarding the start symbol of each hop and information regarding a slot offset.

The position of the last symbol of each hop may be obtained by adding ii) the length of each hop to the position of the start symbol of each hop.

The frequency hopping configuration may further include at least one of: iii) information regarding the number of the plurality of hops, iv) information regarding a start PRB of the leading hop in the time domain among the plurality of hops, v) information regarding a hop bandwidth, or vi) information regarding the number of overlapped RBs between hops.

None of the plurality of hops may be configured across a plurality of slots.

The UE may be a second-type UE with reduced capability to support a smaller maximum UE bandwidth than that of the first-type UE.

The frequency hopping may be performed based on RF retuning.

FIG. 27 illustrates a flow of an SRS reception method of a network (BS, TRPs and/or LMF) according to an embodiment.

Referring to FIG. 27, the network (BS and/or LMF) may determine a frequency hopping configuration for an SRS for positioning (C05).

The BS may transmit configuration information including the frequency hopping configuration to the UE via higher layer signaling (C10).

The network (BS and/or TRPs) may receive, from the UE, the SRS for positioning in the frequency band of each of a plurality of hops based on the configuration information including the frequency hopping configuration (C10).

The frequency hopping configuration may include (i) information regarding a start position of each hop and (ii) information regarding a length of each hop in the time domain.

Based on that the UE is a second-type UE with reduced capability to support a smaller maximum UE bandwidth than that of the first-type UE, the network (BS and/or LMF) may determine the frequency hopping configuration such that a single hop among the plurality of hops is not configured beyond a single slot.

The frequency hopping configuration may include (i) the information regarding the start position of each hop and (ii) the information regarding the length of each hop in the time domain. The frequency hopping configuration may further include at least one of: iii) information regarding the number of the plurality of hops, iv) information regarding a start PRB of the leading hop in the time domain among the plurality of hops, v) information regarding a hop bandwidth, or vi) information regarding the number of overlapped RBs between hops. i) The information regarding the start position of each hop may include information regarding the start symbol of each hop and information regarding a slot offset.

None of the plurality of hops may be configured beyond a single-slot duration associated with each hop.

The symbols of the single hop, from the start symbol to the last symbol, may be included within the single-slot duration.

The position of the last symbol of each hop may be obtained by adding ii) the length of each hop to the position of the start symbol of each hop.

None of the plurality of hops may be configured across a plurality of slots.

The frequency hopping may be performed based on RF retuning of the UE.

FIG. 28 illustrates a communication system 1 applied to the present disclosure.

Referring to FIG. 28, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 29 illustrates wireless devices applicable to the present disclosure.

Referring to FIG. 29, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 28.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 30 illustrates another example of a wireless device applied to the present disclosure. The wireless device may be implemented in various forms according to a use-case/service (refer to FIG. 28).

Referring to FIG. 30, wireless devices 100 and 200 may correspond to the wireless devices 100 and 200 of FIG. 29 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 29. For example, the transceiver(s) 114 may include the one or more transceivers 106 and 206 and/or the one or more antennas 108 and 208 of FIG. 29. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 28), the vehicles (100b-1 and 100b-2 of FIG. 28), the XR device (100c of FIG. 28), the hand-held device (100d of FIG. 28), the home appliance (100e of FIG. 28), the IoT device (100f of FIG. 28), a digital broadcast terminal, a hologram device, a public safety device, an MTC device, a medicine device, a fintech device (or a finance device), a security device, a climate/environment device, the AI server/device (400 of FIG. 28), the BSs (200 of FIG. 28), a network node, etc. The wireless device may be used in a mobile or fixed place according to a use-example/service.

In FIG. 30, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 31 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 31, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 30, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, and/or various apparatuses such as a location server etc. in a wireless mobile communication system.

## Claims

1. A method of transmitting a sounding reference signal (SRS) by a user equipment (UE) in a wireless communication system, the method comprising:

    receiving configuration information regarding an SRS for positioning through higher layer signaling; and
    based on that the configuration information includes a frequency hopping configuration for the SRS for positioning, transmitting the SRS for positioning in a frequency band of each of a plurality of hops,
    wherein the frequency hopping configuration comprises i) information regarding a start position of each hop in a time domain and ii) information regarding a length of each hop in the time domain, and
    wherein the UE does not expect a single hop among the plurality of hops configured based on the frequency hopping configuration to be configured beyond a single slot.

2. The method of claim 1, wherein the UE does not expect any of the plurality of hops to be configured beyond a single-slot duration related to each hop.

3. The method of claim 1, wherein symbols from a start symbol to a last symbol of the single hop are included within the single-slot duration.

4. The method of claim 3, wherein i) the information regarding the start position of each hop comprises information regarding a start symbol of each hop and information regarding a slot offset, and
    wherein a position of a last symbol of each hop is obtained by adding ii) the length of each hop to a position of the start symbol of each hop.

**5.** The method of claim 1, wherein the frequency hopping configuration further comprises at least one of: iii) information regarding a number of the plurality of hops, iv) information regarding a start physical resource block (PRB) of a leading hop in the time domain among the plurality of hops in the time domain, v) information regarding a hop bandwidth, or vi) information regarding a number of overlapped resource blocks between hops.

**6.** The method of claim 1, wherein none of the plurality of hops is configured across a plurality of slots.

**7.** The method of claim 1, wherein the UE is a second-type UE with reduced capability to support a smaller maximum UE bandwidth than a first-type UE.

**8.** The method of claim 1, wherein the frequency hopping is performed based on radio frequency (RF) retuning.

**9.** A processor-readable recording medium having recorded thereon a program for executing the method of claim 1.

**10.** A device for wireless communication, the device comprising:

a memory configured to store instructions; and
a processor configured to perform operations by executing the instructions,
where the operations of the processor comprise:

receiving configuration information regarding a sounding reference signal (SRS) for positioning through higher layer signaling; and
based on that the configuration information includes a frequency hopping configuration for the SRS for positioning, transmitting the SRS for positioning in a frequency band of each of a plurality of hops,
wherein the frequency hopping configuration comprises i) information regarding a start position of each hop in a time domain and ii) information regarding a length of each hop in the time domain, and
wherein the device does not expect a single hop among the plurality of hops configured based on the frequency hopping configuration to be configured beyond a single slot.

**11.** The device of claim 10, further comprising a transceiver,
wherein the device is a user equipment (UE) operating in a wireless communication system.

**12.** The device of claim 10, wherein the device is a processing device configured to control a user equipment (UE) operating in a wireless communication system.

**13.** A method of receiving a sounding reference signal (SRS) by at least one base station (BS) in a wireless communication system, the method comprising:

determining a frequency hopping configuration for an SRS for positioning;
transmitting configuration information including the frequency hopping configuration to a user equipment (UE) through higher layer signaling; and
receiving, from the UE, the SRS for positioning in a frequency band of each of a plurality of hops based on the configuration information including the frequency hopping configuration,
wherein the frequency hopping configuration comprises i) information regarding a start position of each hop in a time domain and ii) information regarding a length of each hop in the time domain, and
wherein based on that the UE is a second-type UE with reduced capability to support a smaller maximum UE bandwidth than a first-type UE, the BS determines the frequency hopping configuration such that a single hop among the plurality of hops is not configured beyond a single slot.

**14.** A processor-readable recording medium having recorded thereon a program for executing the method of claim 13.

**15.** A base station (BS) for wireless communication, the BS comprising:

at least one memory configured to store instructions; and
at least one processor configured to perform operations by executing the instructions,
where the operations of the processor comprise:

determining a frequency hopping configuration for a sounding reference signal (SRS) for positioning;

transmitting configuration information including the frequency hopping configuration to a user equipment (UE) through higher layer signaling; and

receiving, from the UE, the SRS for positioning in a frequency band of each of a plurality of hops based on the configuration information including the frequency hopping configuration,

wherein the frequency hopping configuration comprises i) information regarding a start position of each hop in a time domain and ii) information regarding a length of each hop in the time domain, and

wherein based on that the UE is a second-type UE with reduced capability to support a smaller maximum UE bandwidth than a first-type UE, the at least one processor is configured to determine the frequency hopping configuration such that a single hop among the plurality of hops is not configured beyond a single slot.

# FIG. 1

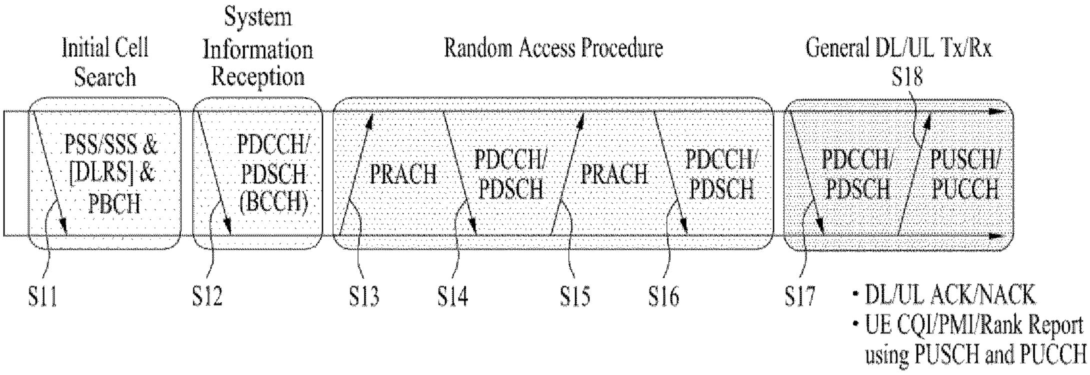
Initial Cell Search
System Information Reception
Random Access Procedure
General DL/UL Tx/Rx
S18
PSS/SSS & [DLRS] & PBCH
PDCCH/ PDSCH (BCCH)
PRACH
PDCCH/ PDSCH
PRACH
PDCCH/ PDSCH
PDCCH/ PDSCH
PUSCH/ PUCCH
S11
S12
S13
S14
S15
S16
S17
• DL/UL ACK/NACK
• UE CQI/PMI/Rank Report using PUSCH and PUCCH

# FIG. 2

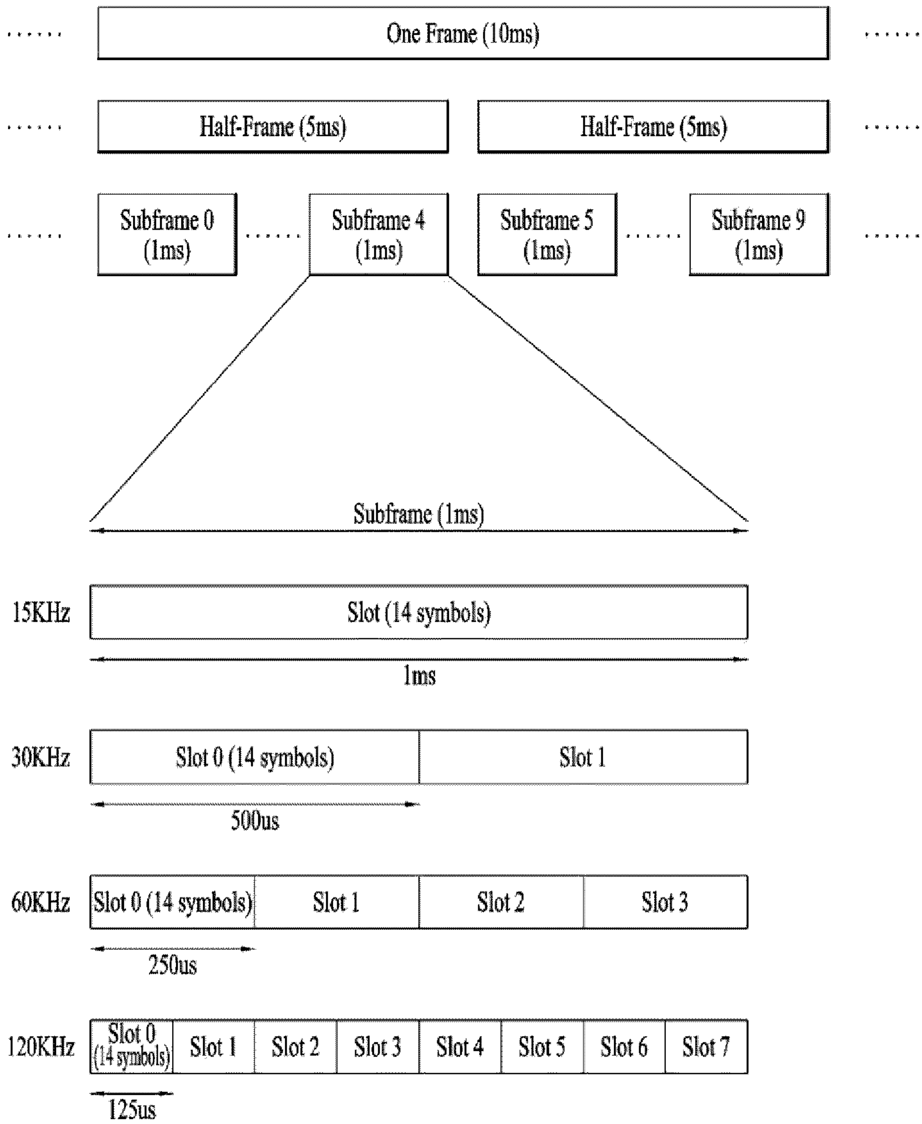
One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot (14 symbols)
1ms
30KHz
Slot 0 (14 symbols)
Slot 1
500us
60KHz
Slot 0 (14 symbols)
Slot 1
Slot 2
Slot 3
250us
120KHz
Slot 0 (14 symbols)
Slot 1
Slot 2
Slot 3
Slot 4
Slot 5
Slot 6
Slot 7
125us

# FIG. 3

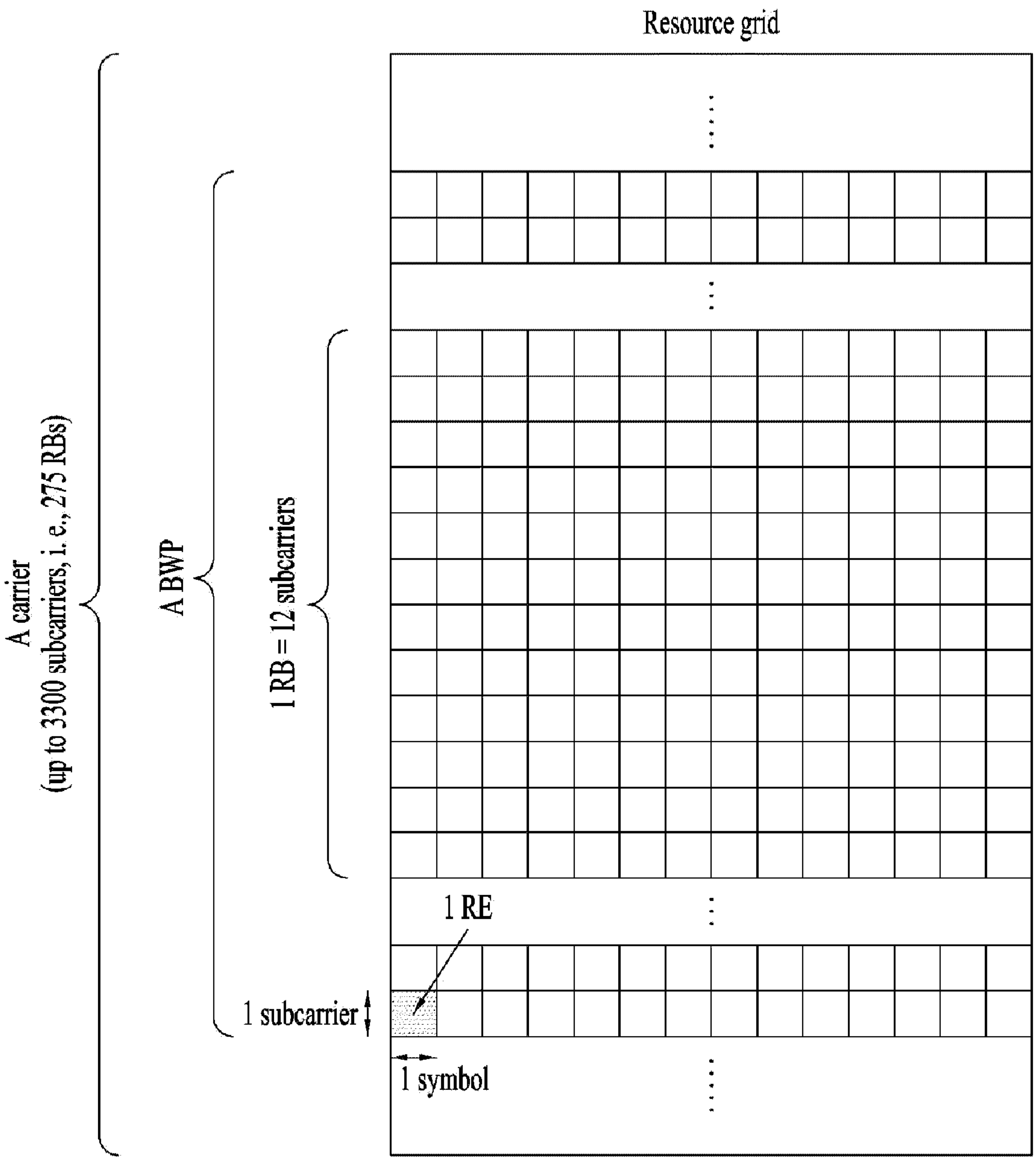
Resource grid
A carrier
(up to 3300 subcarriers, i. e., 275 RBs)
A BWP
1 RB = 12 subcarriers
1 RE
1 subcarrier
1 symbol

FIG. 4

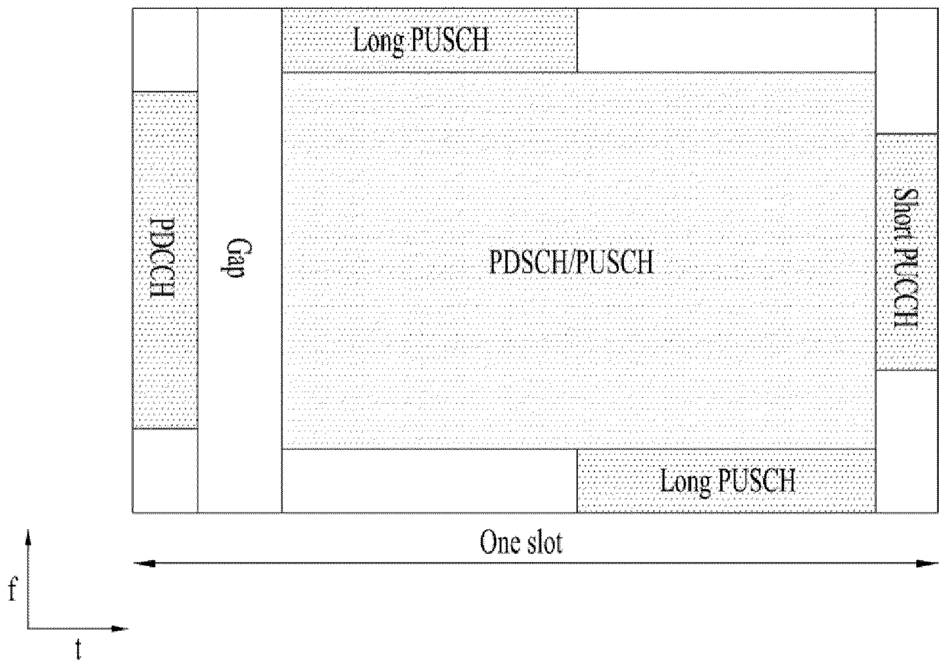
Long PUSCH
PDCCH
Gap
PDSCH/PUSCH
Short PUCCH
Long PUSCH
One slot
f
t

FIG. 5

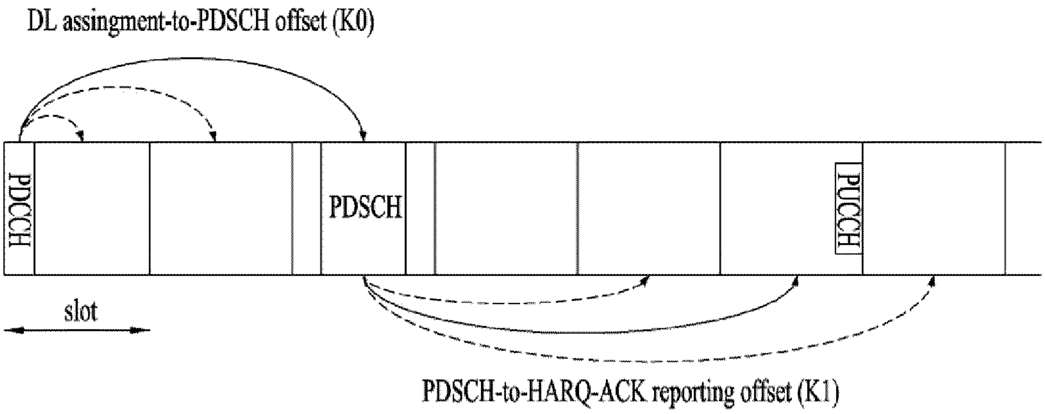
DL assingment-to-PDSCH offset (K0)
PDCCH
PDSCH
PUCCH
slot
PDSCH-to-HARQ-ACK reporting offset (K1)

FIG. 6

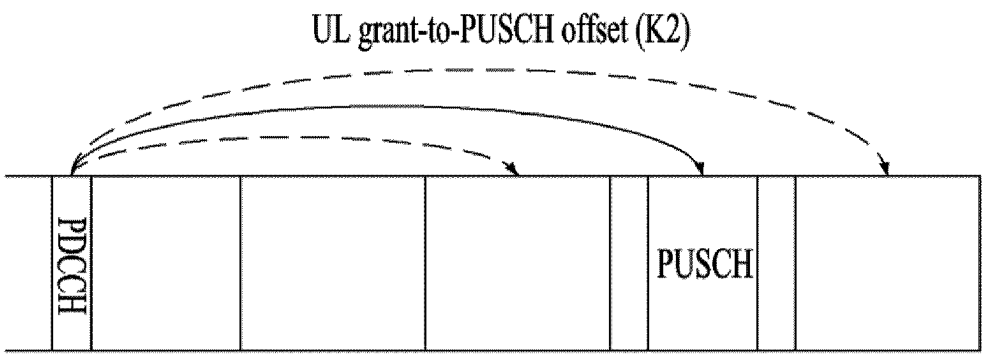
UL grant-to-PUSCH offset (K2)
PDCCH
PUSCH

FIG. 7

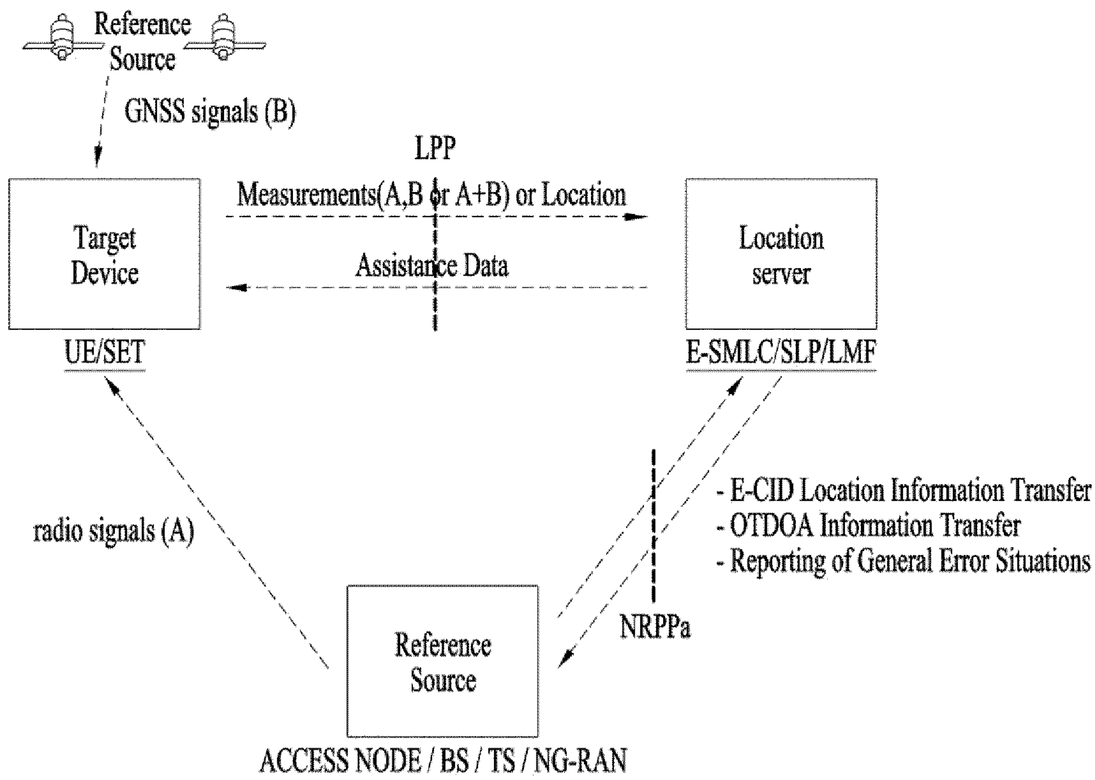
Reference Source
GNSS signals (B)
LPP
Measurements(A,B or A+B) or Location
Assistance Data
Target Device
UE/SET
Location server
E-SMLC/SLP/LMF
radio signals (A)
- E-CID Location Information Transfer
- OTDOA Information Transfer
- Reporting of General Error Situations
NRPPa
Reference Source
ACCESS NODE / BS / TS / NG-RAN

# FIG. 8

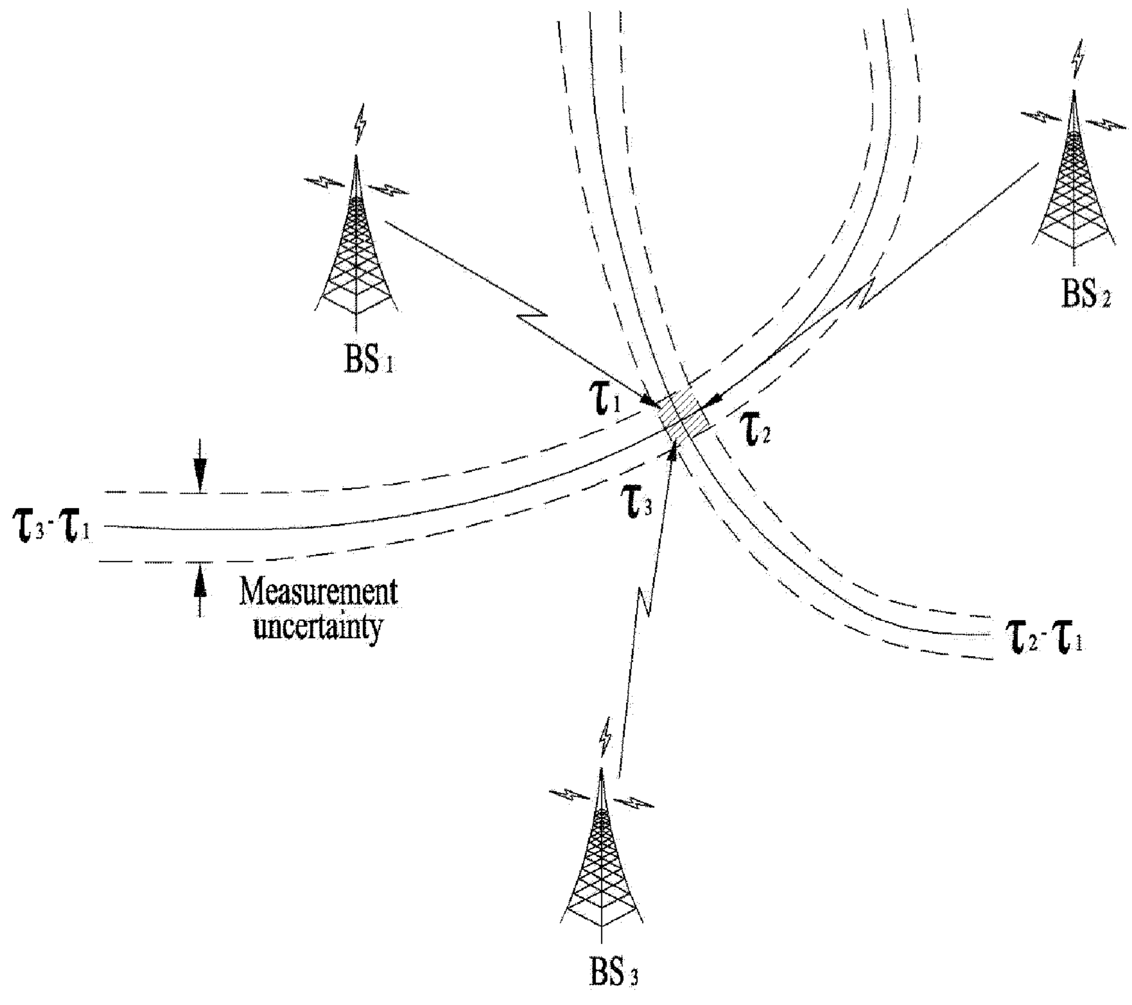

# FIG. 9

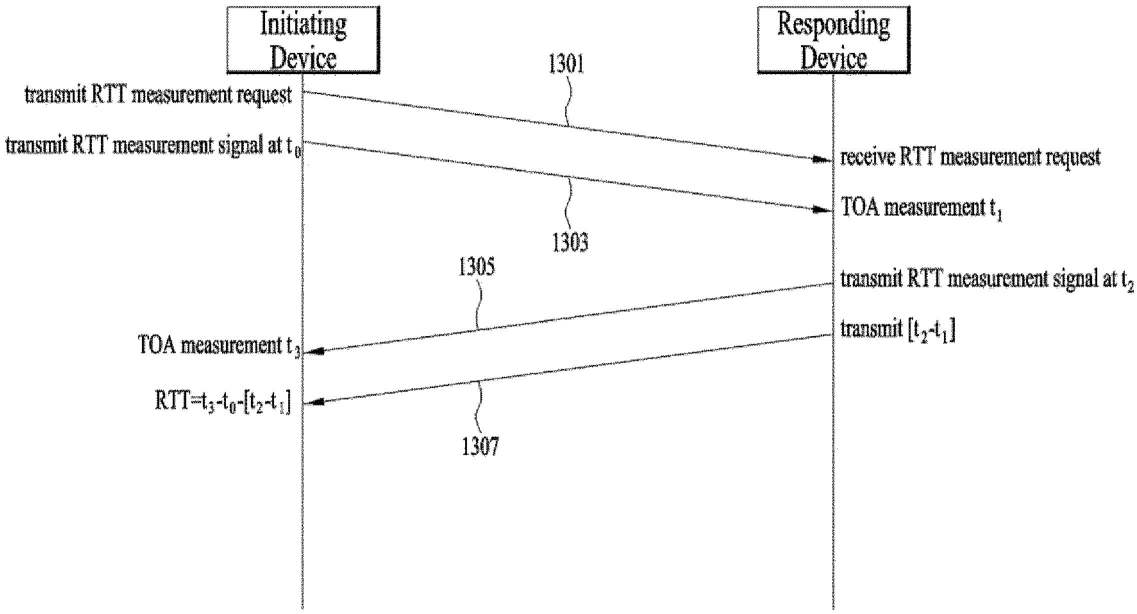
Initiating Device
Responding Device
1301
transmit RTT measurement request
transmit RTT measurement signal at t0
receive RTT measurement request
TOA measurement t1
1303
1305
transmit RTT measurement signal at t2
transmit [t2-t1]
TOA measurement t3
RTT=t3-t0-[t2-t1]
1307

(a)

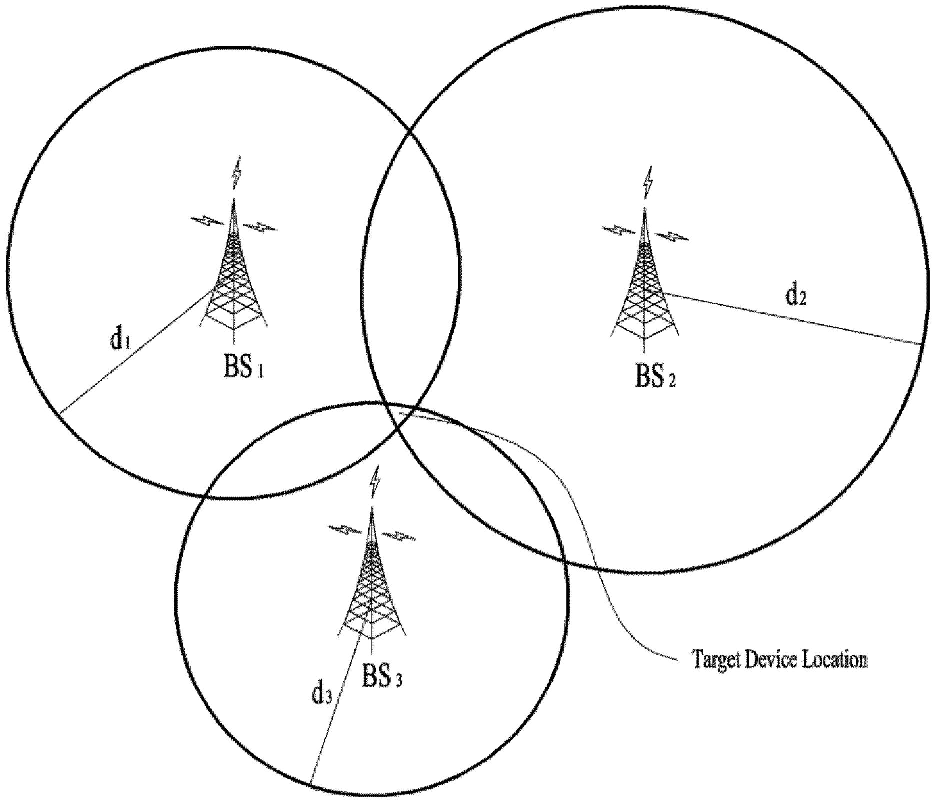
d1
BS1
d2
BS2
d3
BS3
Target Device Location

(b)

FIG. 10

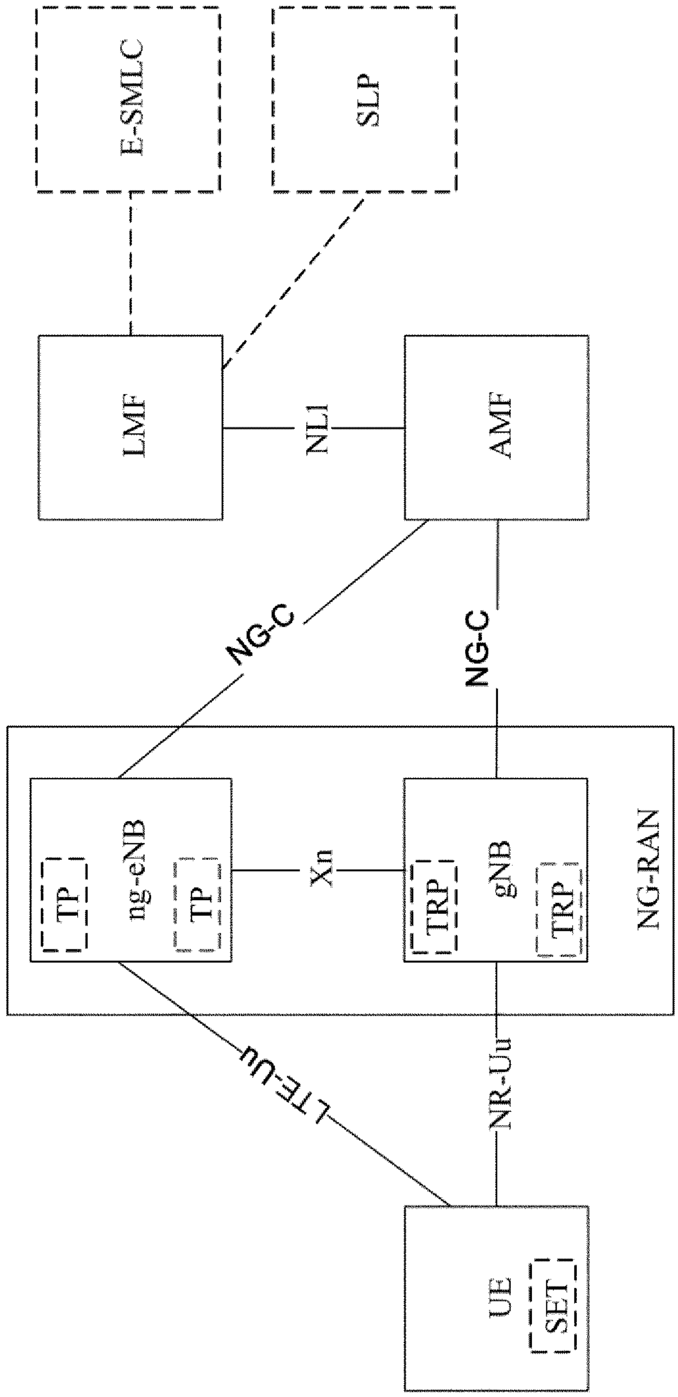
E-SMLC
SLP
LMF
NL1
AMF
NG-C
NG-C
TP
ng-eNB
TP
Xn
TRP
gNB
TRP
NG-RAN
LTE-Uu
NR-Uu
UE
SET

FIG. 11

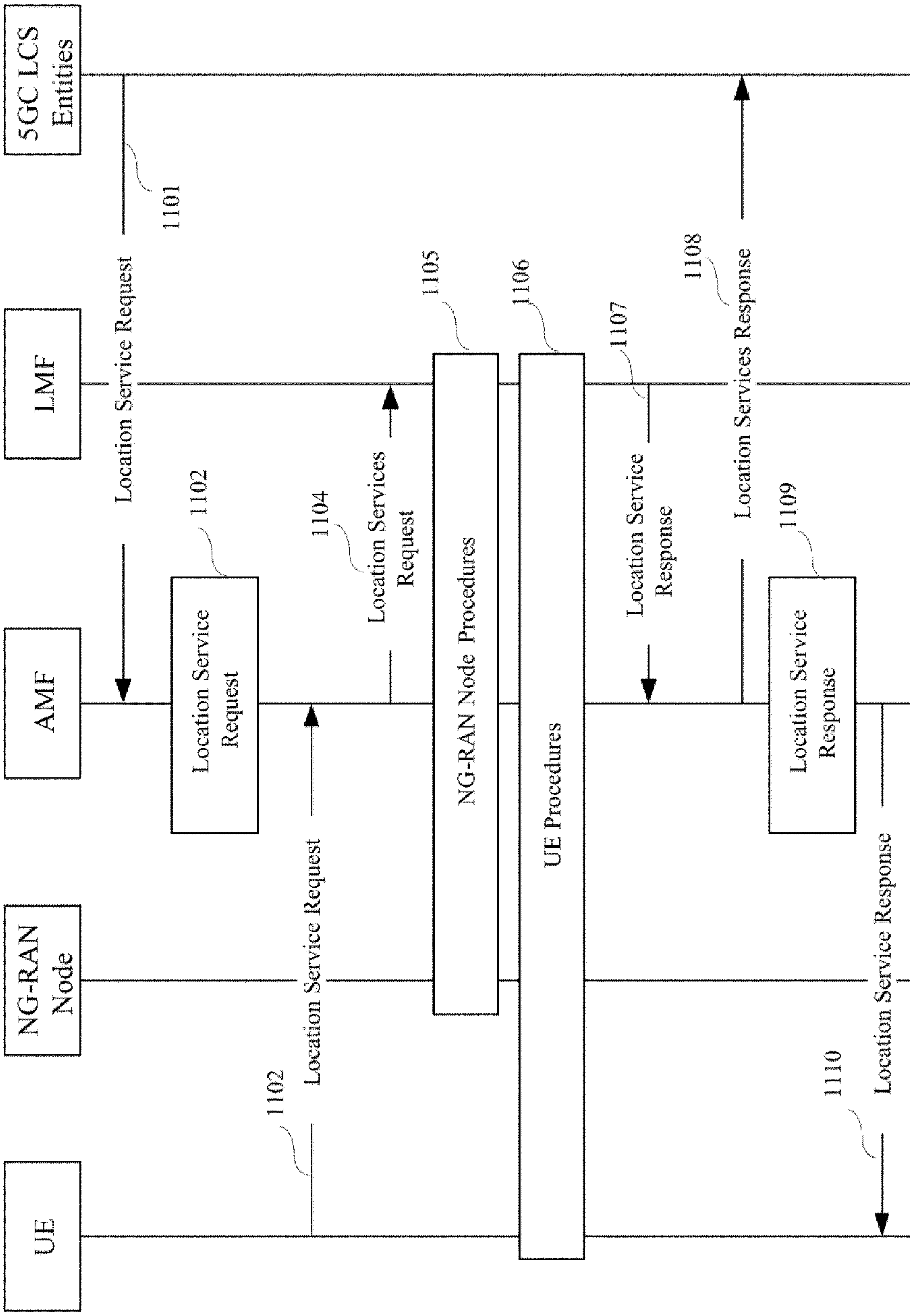
5GC LCS Entities
LMF
AMF
NG-RAN Node
UE
1101
Location Service Request
1102
Location Service Request
1102
Location Service Request
1104
Location Services Request
1105
NG-RAN Node Procedures
1106
UE Procedures
1107
Location Service Response
1108
Location Services Response
1109
Location Service Response
1110
Location Service Response

FIG. 12

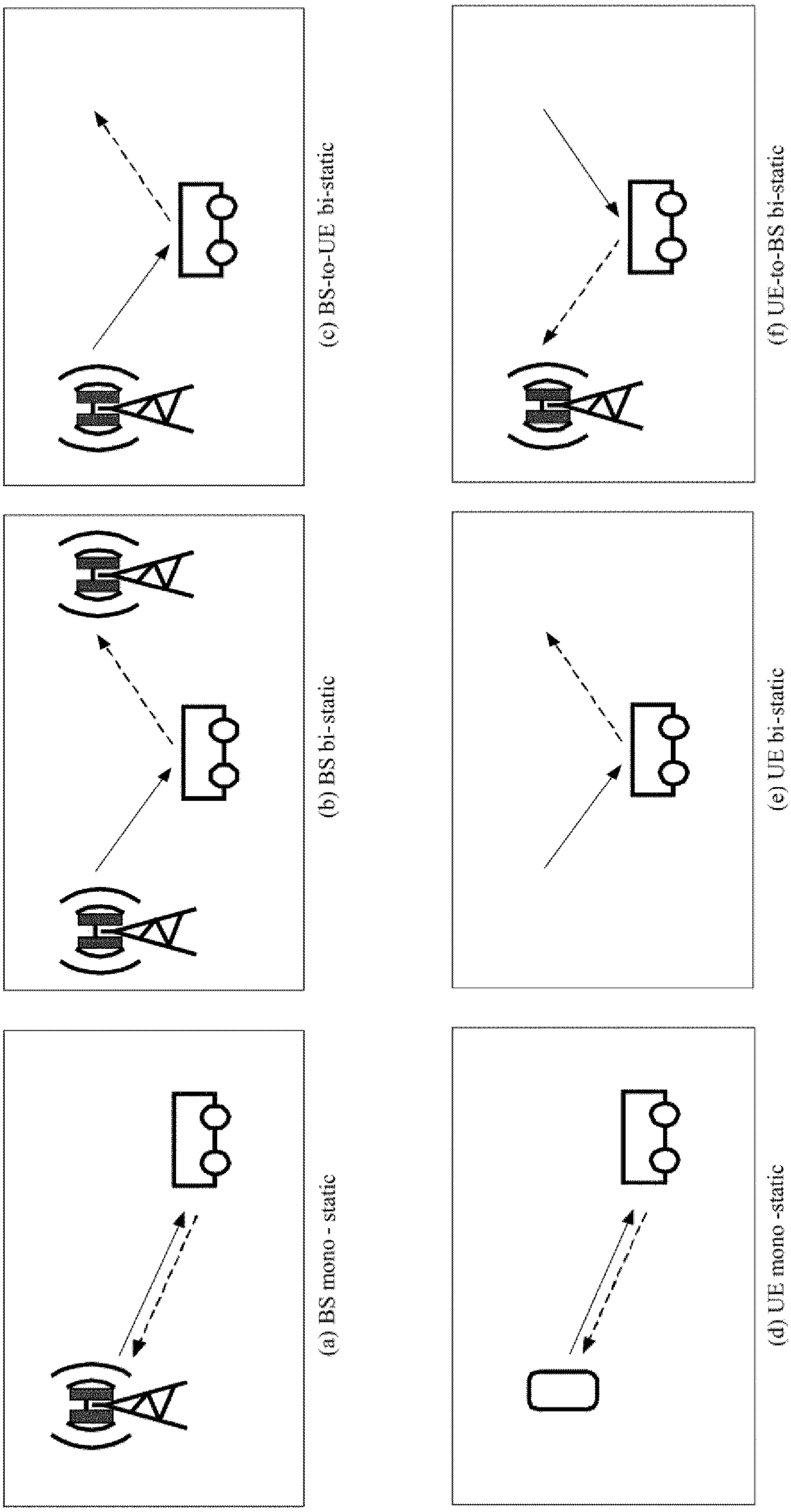
(a) BS mono - static
(b) BS bi-static
(c) BS-to-UE bi-static
(d) UE mono -static
(e) UE bi-static
(f) UE-to-BS bi-static

FIG. 13

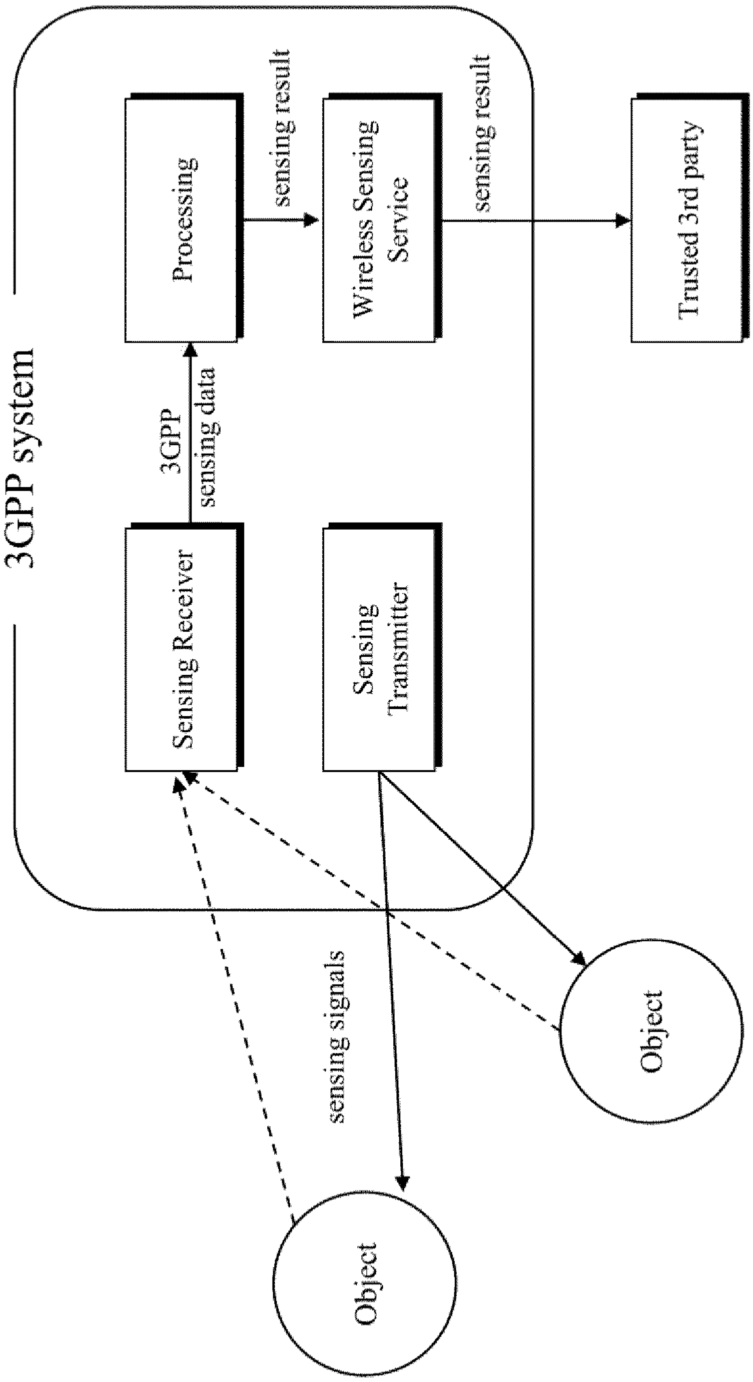
3GPP system
Processing
sensing result
Wireless Sensing Service
sensing result
Trusted 3rd party
3GPP sensing data
Sensing Receiver
Sensing Transmitter
sensing signals
Object
Object

FIG. 14

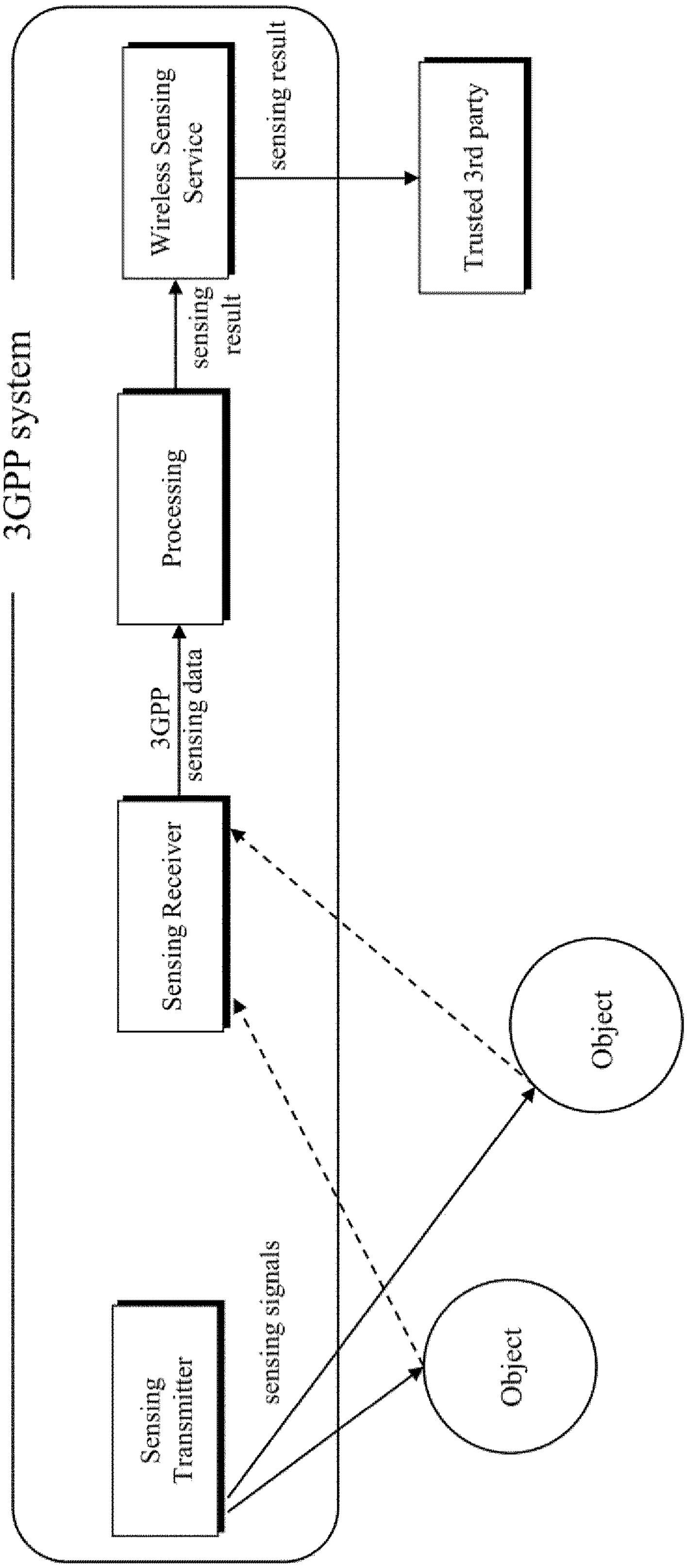
3GPP system
Sensing Transmitter
Sensing Receiver
3GPP sensing data
Processing
sensing result
Wireless Sensing Service
sensing result
Trusted 3rd party
sensing signals
Object
Object

# FIG. 15

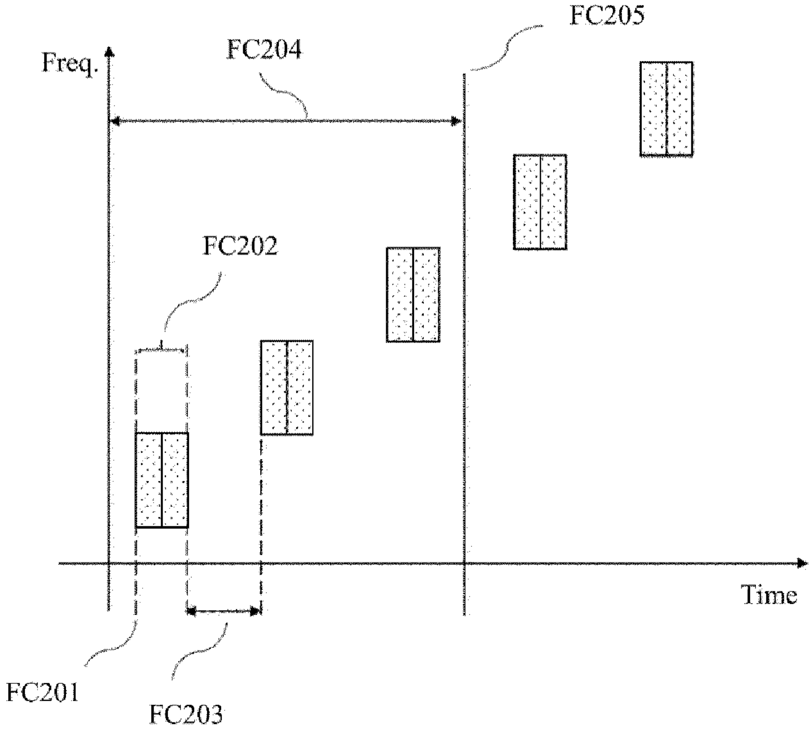
FC205
Freq.
FC204
FC202
Time
FC201
FC203

# FIG. 16

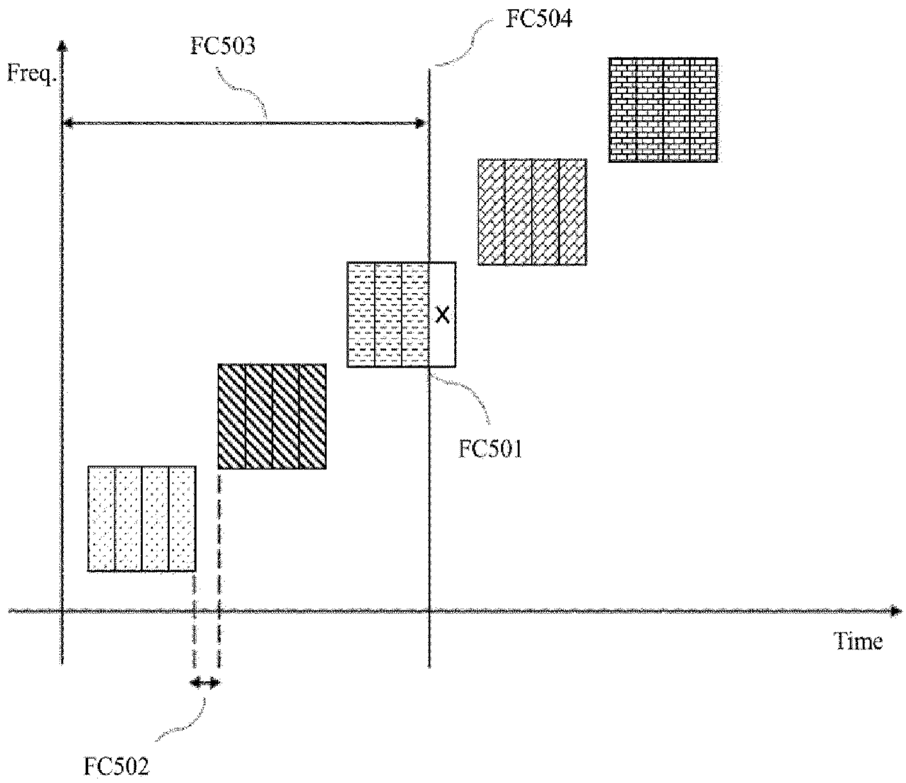
FC504
FC503
Freq.
X
FC501
Time
FC502

# FIG. 17

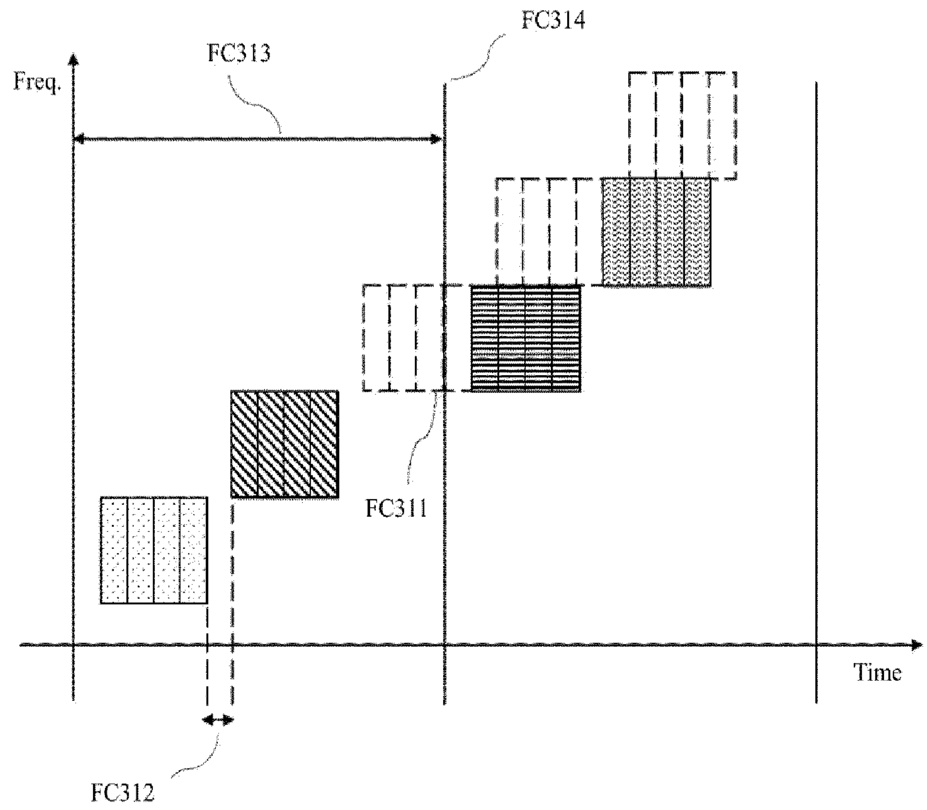
FC314
FC313
Freq.
FC311
Time
FC312

# FIG. 18

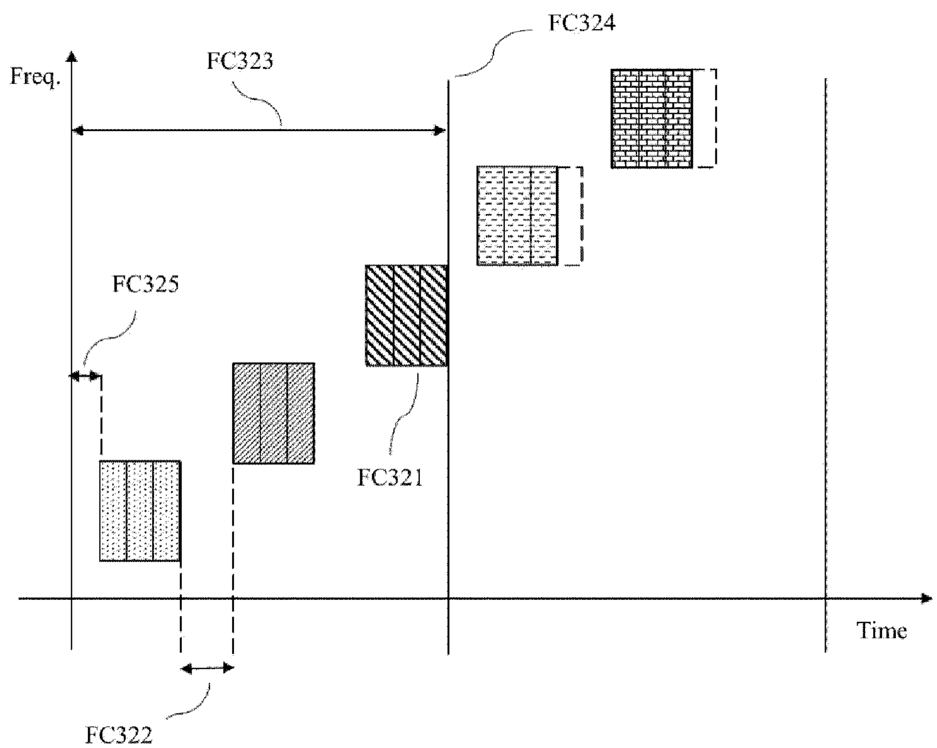
FC324
FC323
Freq.
FC325
FC321
Time
FC322

# FIG. 19

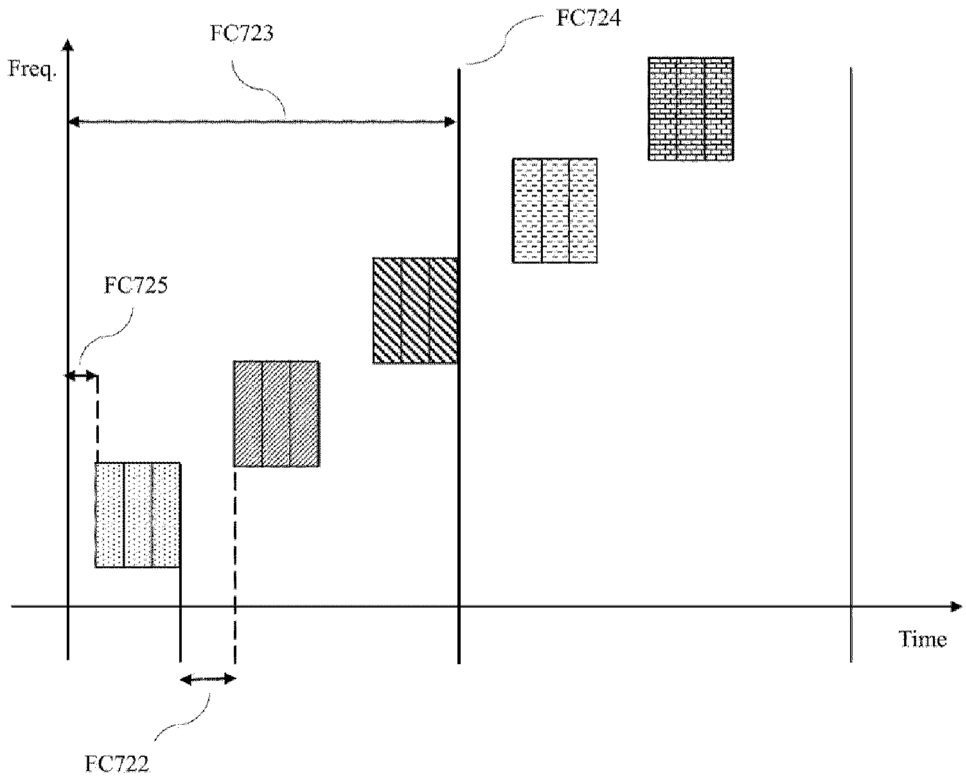


# FIG. 20

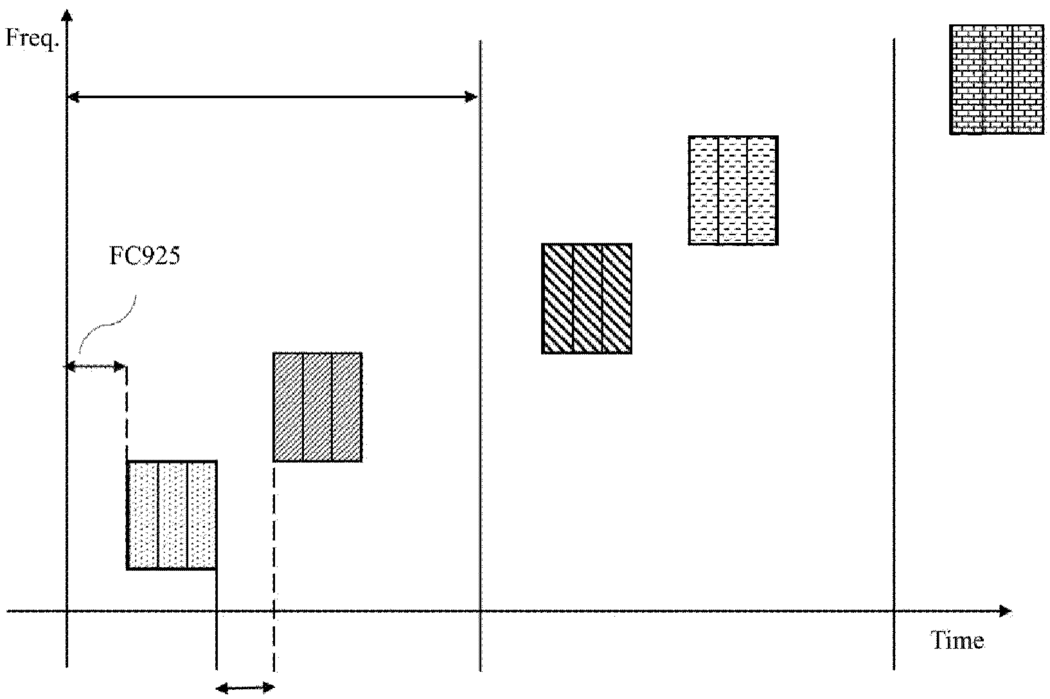

# FIG. 21

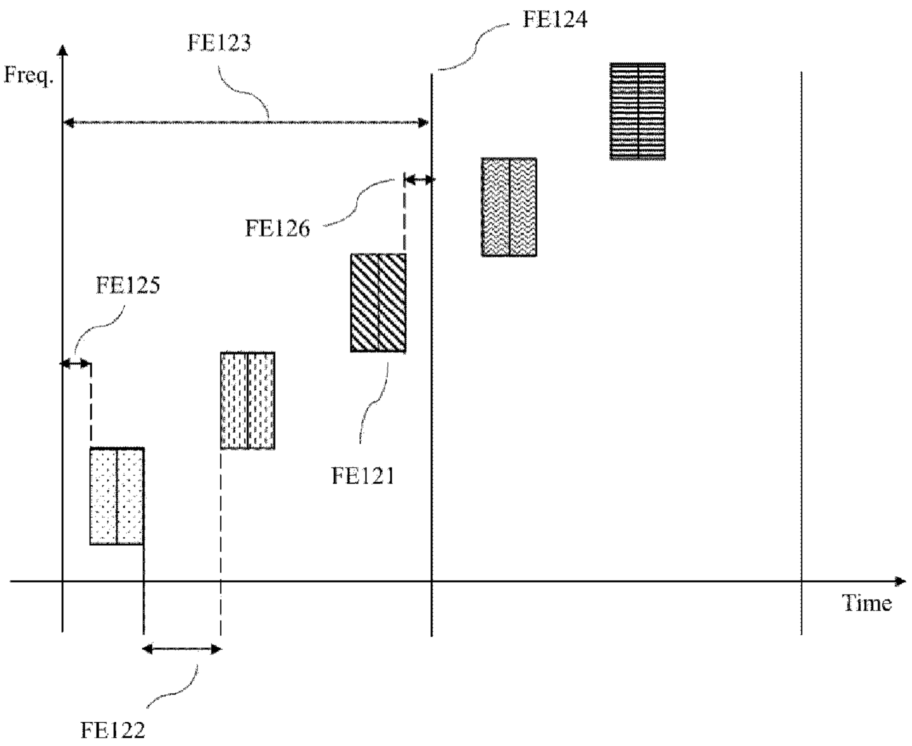
FE124
FE123
Freq.
FE126
FE125
FE121
Time
FE122

# FIG. 22

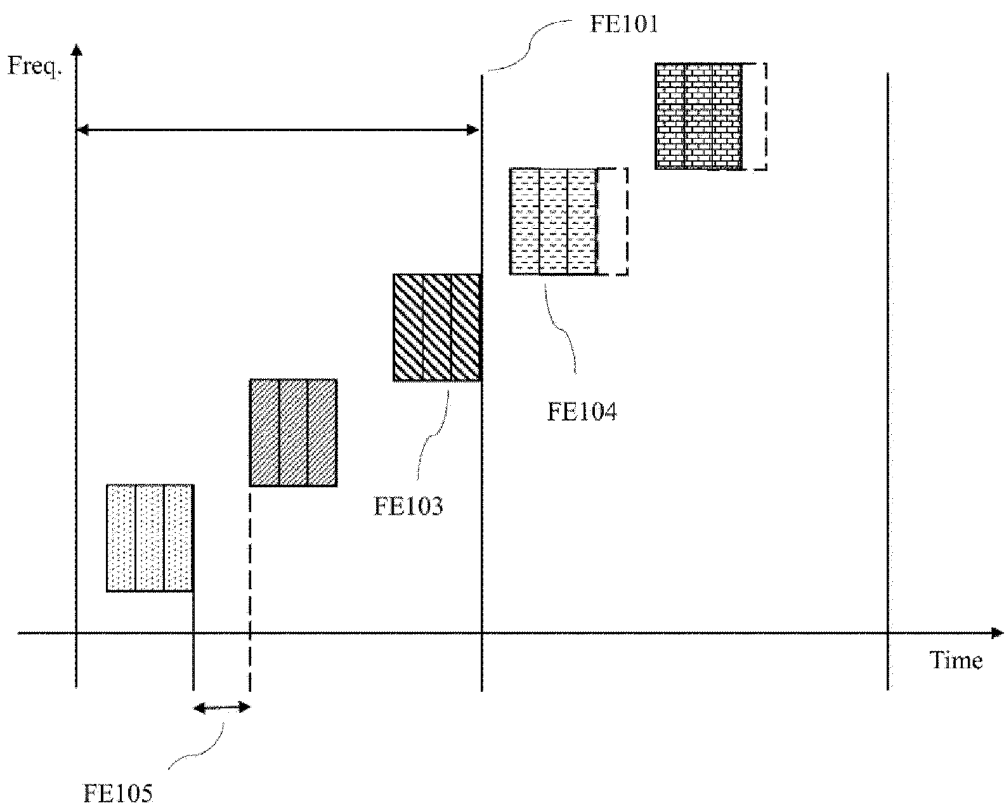
FE101
Freq.
FE104
FE103
Time
FE105

# FIG. 23

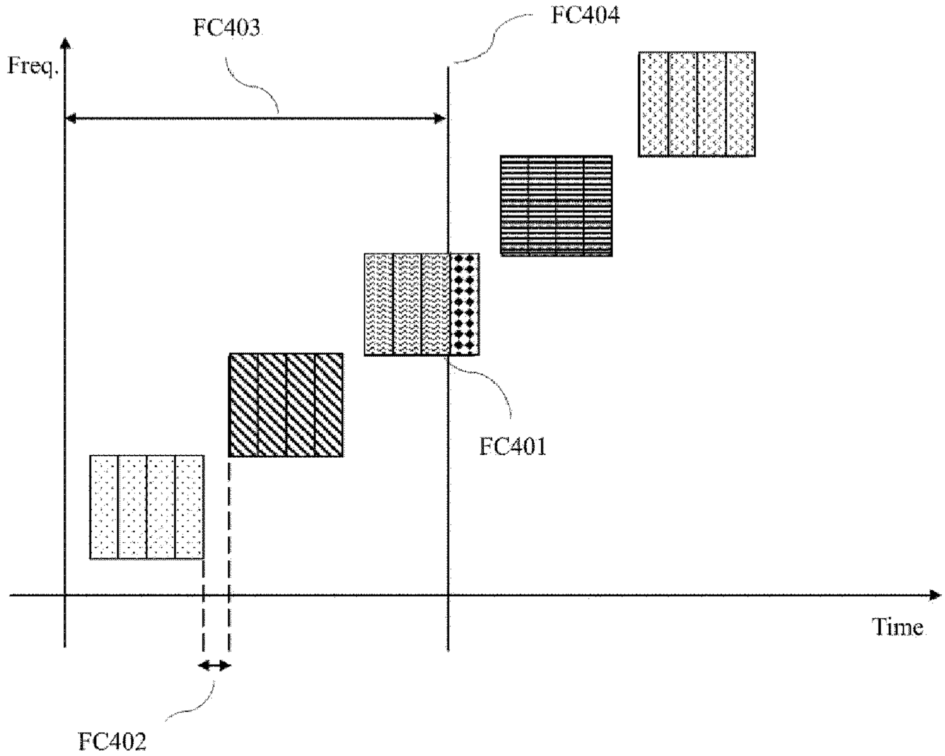
FC403
FC404
Freq.
FC401
Time
FC402

# FIG. 24

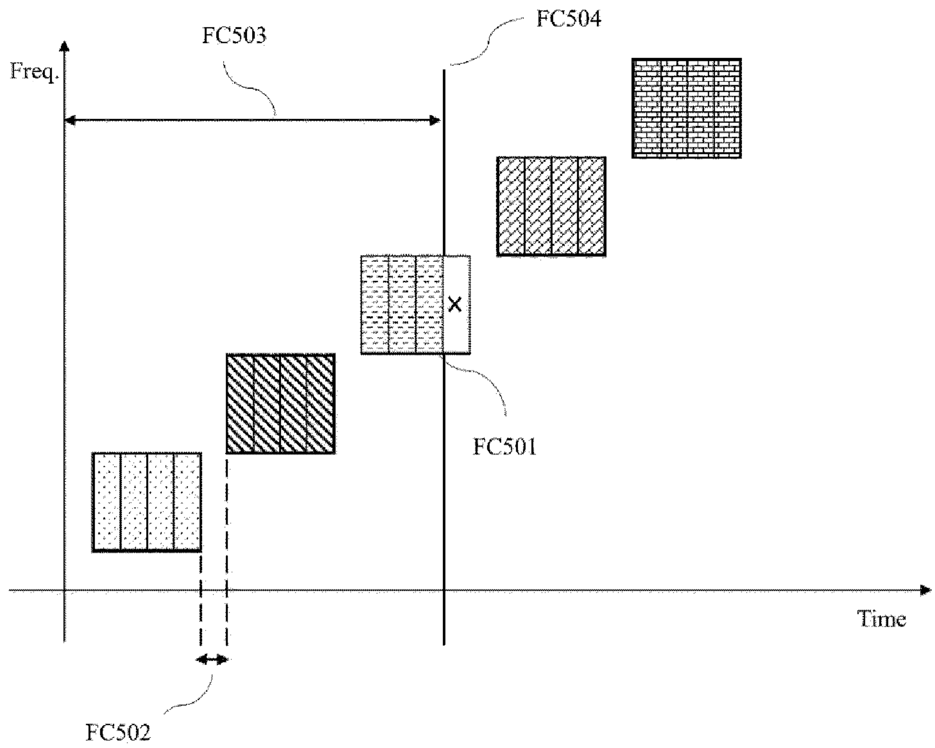
FC503
FC504
Freq.
×
FC501
Time
FC502

# FIG. 25

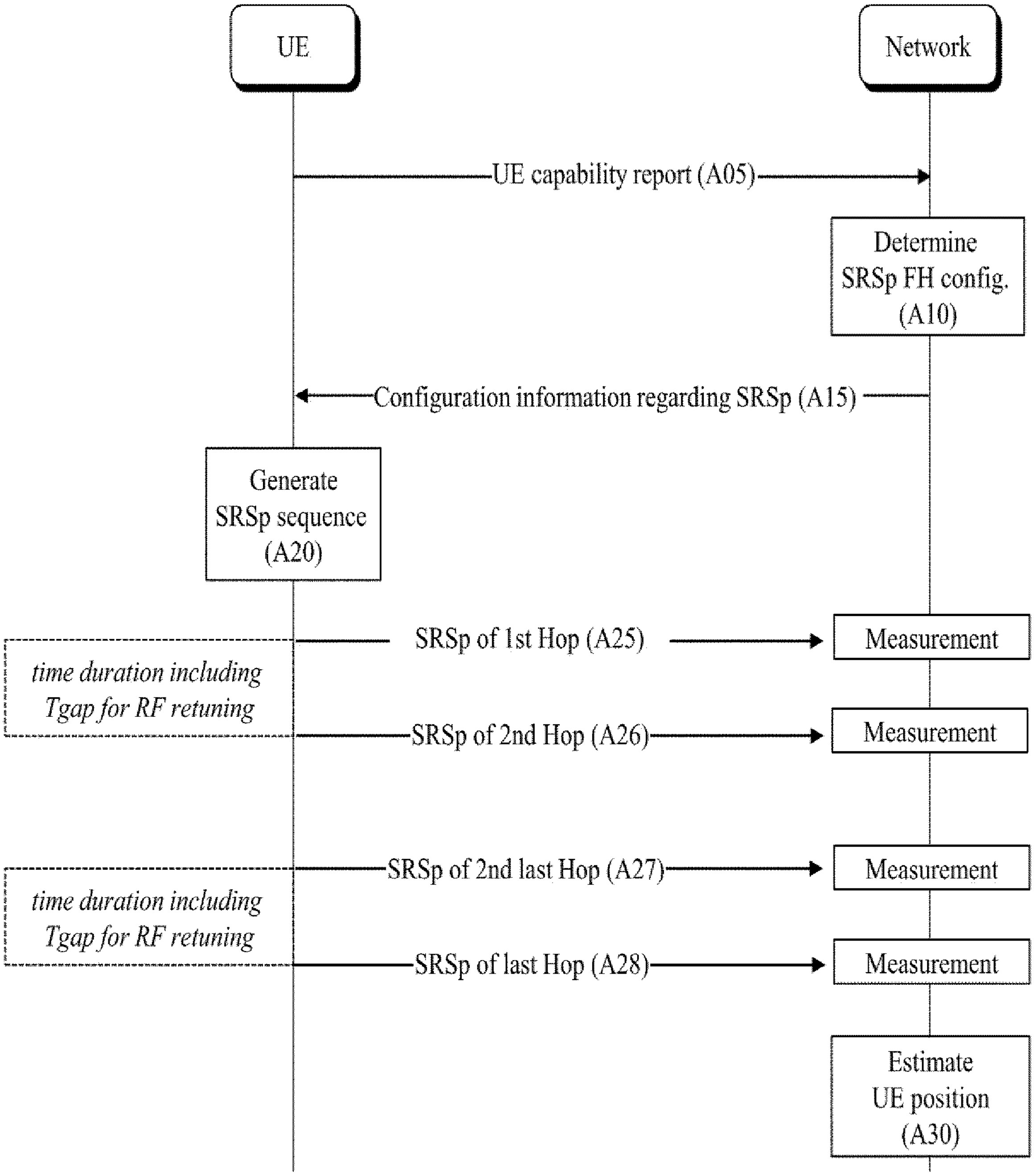
UE
Network
UE capability report (A05)
Determine SRSp FH config. (A10)
Configuration information regarding SRSp (A15)
Generate SRSp sequence (A20)
SRSp of 1st Hop (A25)
Measurement
time duration including Tgap for RF retuning
SRSp of 2nd Hop (A26)
Measurement
SRSp of 2nd last Hop (A27)
Measurement
time duration including Tgap for RF retuning
SRSp of last Hop (A28)
Measurement
Estimate UE position (A30)

FIG. 26

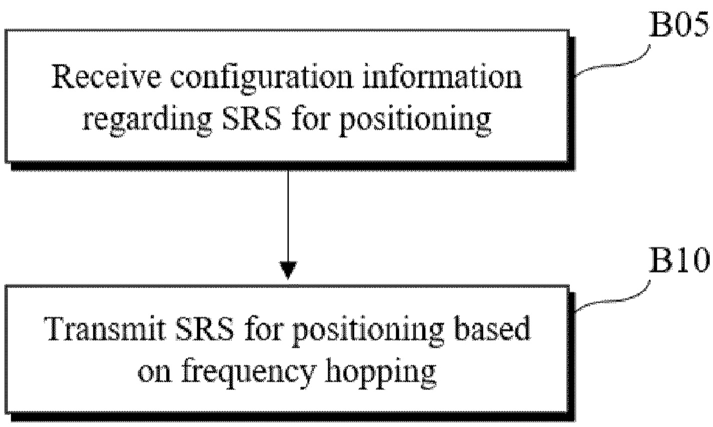
B05
Receive configuration information regarding SRS for positioning
B10
Transmit SRS for positioning based on frequency hopping

FIG. 27

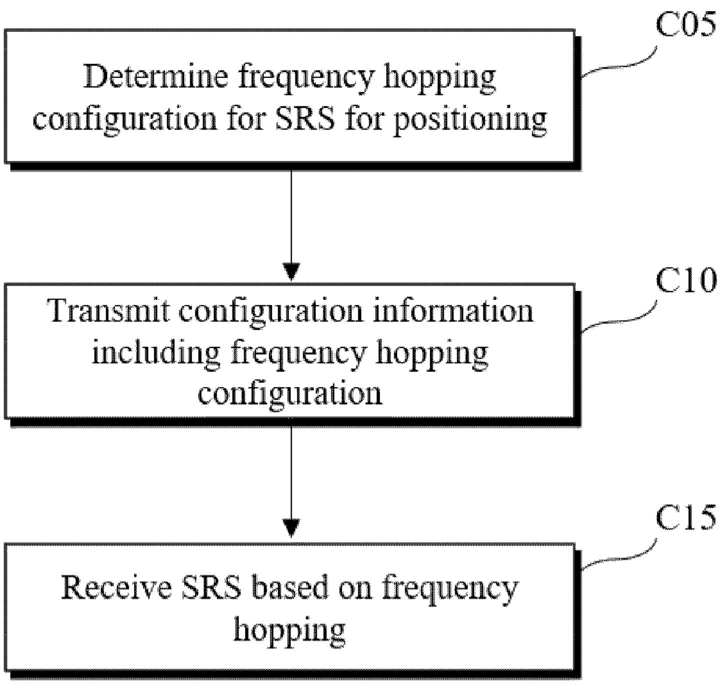
C05
Determine frequency hopping configuration for SRS for positioning
C10
Transmit configuration information including frequency hopping configuration
C15
Receive SRS based on frequency hopping

# FIG. 28

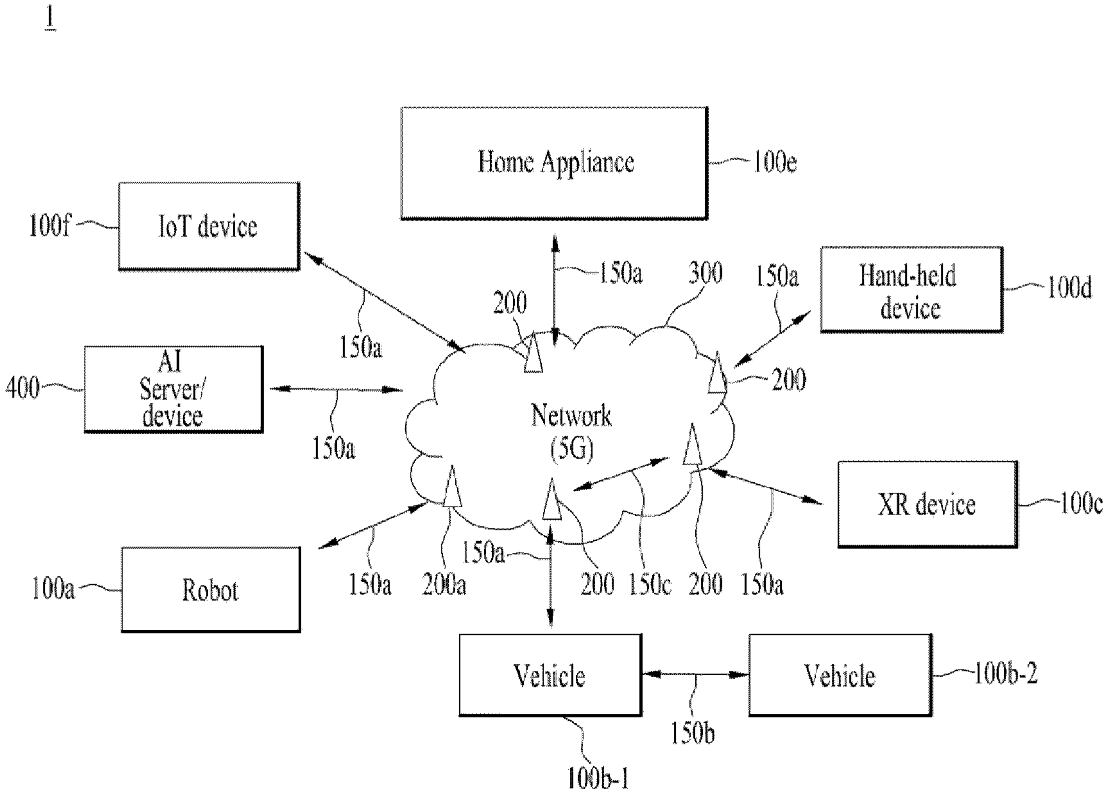
1
Home Appliance
100e
IoT device
100f
150a
300
150a
Hand-held device
100d
200
150a
AI Server/ device
400
200
Network (5G)
150a
XR device
100c
Robot
100a
150a
150a
200a
200
150c
200
150a
Vehicle
Vehicle
100b-2
150b
100b-1

# FIG. 29

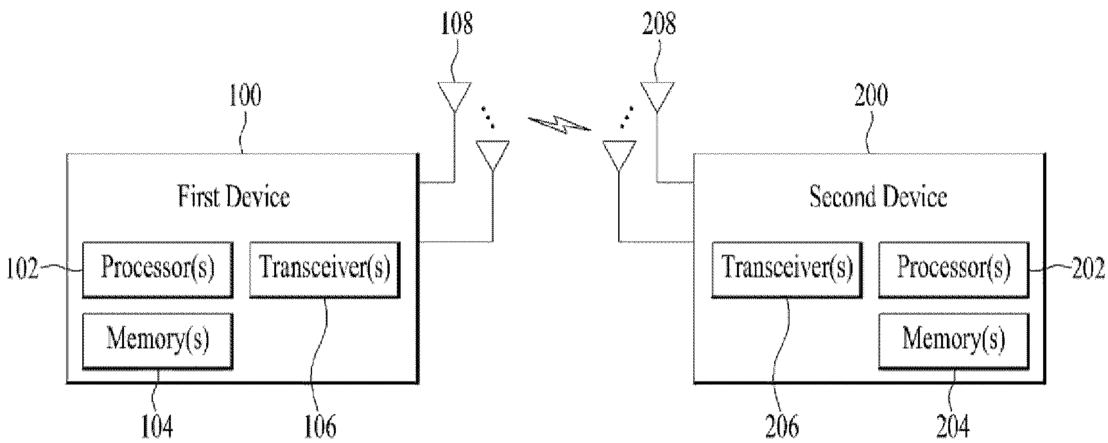
108
208
100
200
First Device
Second Device
102
Processor(s)
Transceiver(s)
Transceiver(s)
Processor(s)
202
Memory(s)
Memory(s)
104
106
206
204

# FIG. 30

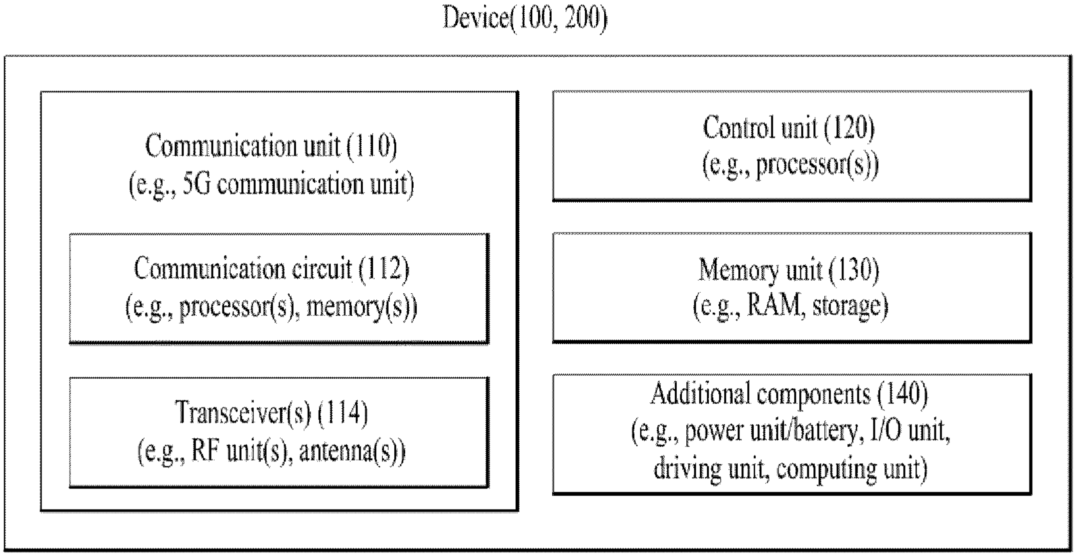
Device(100, 200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

# FIG. 31

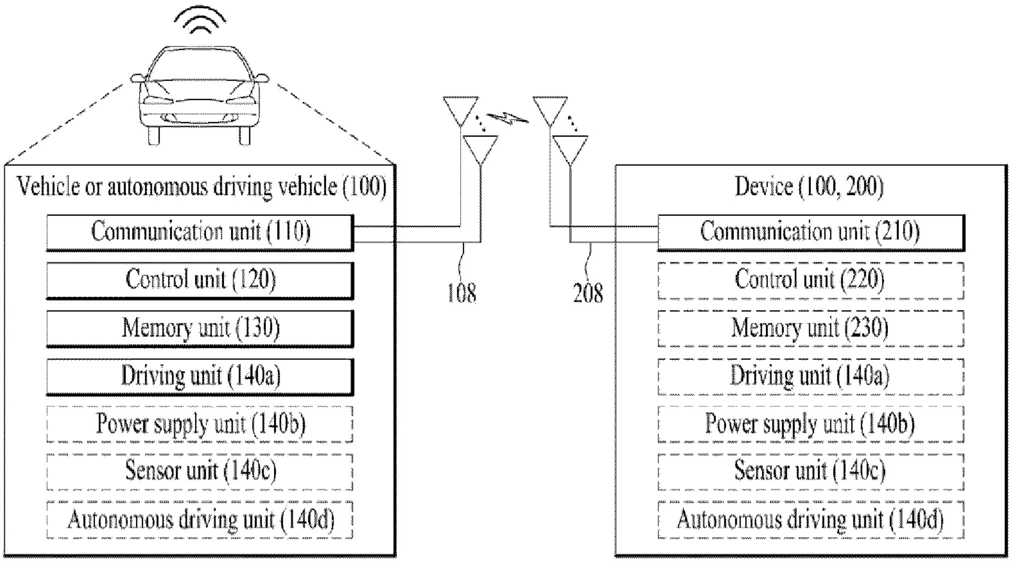
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

**INTERNATIONAL SEARCH REPORT**

International application No.
**PCT/KR2024/004654**

**A. CLASSIFICATION OF SUBJECT MATTER**

**H04L 5/00**(2006.01)i; **H04L 1/08**(2006.01)i; **H04L 5/14**(2006.01)i; **H04W 64/00**(2009.01)i

According to International Patent Classification (IPC) or to both national classification and IPC

**B. FIELDS SEARCHED**

Minimum documentation searched (classification system followed by classification symbols)

H04L 5/00(2006.01); H04L 12/26(2006.01); H04L 27/26(2006.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝(positioning), SRS, 주파수 호핑(frequency hopping), 홉(hop), 단일 슬롯(single slot)

**C. DOCUMENTS CONSIDERED TO BE RELEVANT**

| Category* | Citation of document, with indication, where appropriate, of the relevant passages | Relevant to claim No. |
|---|---|---|
| X<br>A | QUALCOMM INCORPORATED. Positioning for reduced capabilities UEs. R1-2301423, 3GPP TSG RAN WG1 #112. Athens, Greece. 17 February 2023.<br>See pages 1 and 8-9. | 1-6,8-12<br>7,13-15 |
| A | KR 10-2023-0010638 A (LG ELECTRONICS INC.) 19 January 2023 (2023-01-19)<br>See paragraphs [0365]-[0368]; and figure 20. | 1-15 |
| A | US 2022-0123886 A1 (TELEFONAKTIEBOLAGET LM ERICSSON (PUBL)) 21 April 2022 (2022-04-21)<br>See paragraph [0189]; and figure 25. | 1-15 |
| A | WO 2022-266561 A1 (QUALCOMM INCORPORATED) 22 December 2022 (2022-12-22)<br>See paragraphs [0148]-[0154]; and figures 11-12. | 1-15 |
| A | US 2015-0249527 A1 (MEDIATEK INC.) 03 September 2015 (2015-09-03)<br>See paragraphs [0050]-[0051]; and figures 8-9. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 July 2024** | **31 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/004654**

| Patent document cited in search report | | | Publication date (day/month/year) | Patent family member(s) | | | Publication date (day/month/year) |
|---|---|---|---|---|---|---|---|
| KR | 10-2023-0010638 | A | 19 January 2023 | US | 2023-0345380 | A1 | 26 October 2023 |
| | | | | WO | 2021-230731 | A1 | 18 November 2021 |
| US | 2022-0123886 | A1 | 21 April 2022 | BR | 112021012789 | A2 | 14 September 2021 |
| | | | | CN | 113302996 | A | 24 August 2021 |
| | | | | EP | 3909326 | A2 | 17 November 2021 |
| | | | | WO | 2020-145879 | A2 | 16 July 2020 |
| | | | | WO | 2020-145879 | A3 | 24 September 2020 |
| WO | 2022-266561 | A1 | 22 December 2022 | CN | 117546434 | A | 09 February 2024 |
| | | | | EP | 4356556 | A1 | 24 April 2024 |
| | | | | KR | 10-2024-0022483 | A | 20 February 2024 |
| US | 2015-0249527 | A1 | 03 September 2015 | CN | 103797871 | A | 14 May 2014 |
| | | | | CN | 103797871 | B | 10 November 2017 |
| | | | | CN | 107743060 | A | 27 February 2018 |
| | | | | CN | 107743060 | B | 30 July 2021 |
| | | | | EP | 2641439 | A1 | 25 September 2013 |
| | | | | EP | 3389321 | A1 | 17 October 2018 |
| | | | | JP | 2014-531841 | A | 27 November 2014 |
| | | | | JP | 5830171 | B2 | 09 December 2015 |
| | | | | US | 2013-0083683 | A1 | 04 April 2013 |
| | | | | US | 9060343 | B2 | 16 June 2015 |
| | | | | US | 9252934 | B2 | 02 February 2016 |
| | | | | WO | 2013-049995 | A1 | 11 April 2013 |

Form PCT/ISA/210 (patent family annex) (July 2022)